# EUROPÄISCHE PATENTSCHRIFT

(11) **EP 0 810 265 B1**
(45) Veröffentlichungstag und Bekanntmachung des Hinweises auf die Patenterteilung: **21.11.2001**
(21) Anmeldenummer: 97106529.7
(22) Anmeldetag: 21.04.1997
(51) Int. Cl.: C09B 56/04, C09B 35/215, C09D 11/00, C09B 67/22

(54) **Substantive Stilbenazofarbstoffe**
Substantive stilbene azo dyestuffs
Colorants azoiques substantifs de la série de stilbène

(30) Priorität: 31.05.1996 DE 19621865
(43) Veröffentlichungstag der Anmeldung: 03.12.1997
(73) Patentinhaber: BAYER AG, 51368 Leverkusen (DE)
(72) Erfinder: Berneth, Horst, Dr., 51373 Leverkusen (DE); Claussen, Uwe, Dr., 51379 Leverkusen (DE)

(56) Entgegenhaltungen:
- EP-A- 0 035 152
- EP-A- 0 306 452
- EP-A- 0 352 229
- EP-A- 0 374 655
- EP-A- 0 376 032
- CH-A- 346 309
- DE-A- 3 512 836
- DE-C- 593 144
- DE-C- 741 469

## Beschreibung

Die vorliegende Erfindung betrifft neue Stilbenazofarbstoffe, Verfahren zu deren Herstellung sowie Verfahren zum Färben und Bedrucken von cellulose- und/oder amidgruppenhaltigem Material sowie weiterhin Verfahren zur Herstellung von flüssigen Farbstoffpräparationen, insbesondere von Tinten unter Einsatz neuer und/oder bekannter Stilbenazofarbstoffe.

Stilbenfarbstoffe sind bereits aus EP-A 376 032 bekannt, wo sie zur Herstellung von lichtpolarisierenden Filmen oder Folien Verwendung finden.

Gemäß EP-A-35 152 werden Disazofarbstoffe zum Färben von Papier offenbart, die als Mittelkomponente eine Stilbeneinheit mit zwei Sulfonsäuregruppen enthält.

Die aus EP-A-352 229 bekannten Disazofarbstoffe werden zum Färben von Papier eingesetzt und enthalten als Mittelkomponente eine Stilbeneinheit ohne Sulfonsäuregruppen.

Aus CH-A-346 309 sind Azofarbstoffe zum Cellulosefärben bekannt, die zwar eine monosulfonierte Stilbeneinheit besitzen, jedoch andere terminale Reste tragen.

Es wurde nun ein Verfahren zum Färben und/oder Bedrucken von cellulose- und/oder amidgruppenhaltigen Materialien gefunden, dadurch gekennzeichnet, daß als Farbstoff mindestens ein Stilbenazofarbstoff, der in Form der freien Säure der Formel (I) 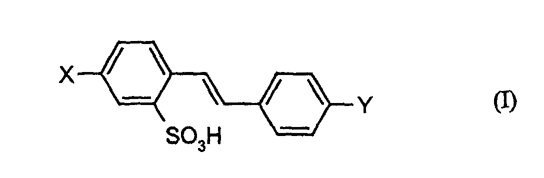 entspricht, worin
- X und Y: unabhängig voneinander für -CF₃, Halogen, -CONR¹R², -COOH, -COOR³, -CN, -NO₂, NR¹R², -OH, -OR³, -NHCOR³, -NHCOOR³, -NHCONHR³ oder -N=N-R stehen, wobei mindestens einer der Reste X oder Y für -N=N-R steht, und
R für einen Rest der Formel 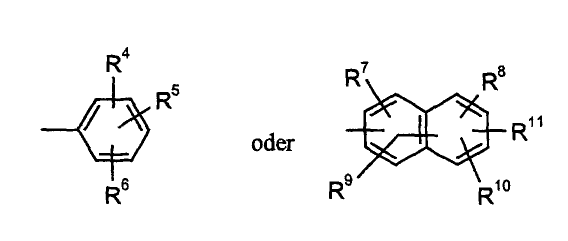 steht, worin
R⁴, R⁵, R⁶, R⁷, R⁸, R⁹, R¹⁰ und R¹¹ unabhängig voneinander für H, Halogen, -OH, -OR³, -NR¹R², R³, -SO₃H, -SO₂NR¹R², -O-COR³, -NHCOR³ stehen und
R¹ und R² unabhängig voneinander für Wasserstoff, für Formyl, für jeweils gegebenenfalls durch C₁-C₄-Alkyl, Hydroxy, C₁- bis C₄-Alkoxy, Amino, C₁- bis C₄-Mono- oder -Dialkylamino, Morpholino, Piperidino, N-R¹²-Piperazino, Halogen, Cyano, Nitro, Phenyl, Carboxy, C₁- bis C₄-Alkoxycarbonyl, Aminocarbonyl, C₁- bis C₄-Mono- oder -Dialkylaminocarbonyl, Sulfo oder OSO₃H substituiertes C₁- bis C₆-Alkyl, C₁- bis C₆-Alkylcarbonyl, C₁- bis C₆-Alkylsulfonyl, C₁- bis C₆-Alkoxycarbonyl, C₁- bis C₆-Mono- oder -Dialkylaminocarbonyl, C₅- bis C₇-Cycloalkyl, C₆- bis C₁₀-Aryl, C6- bis C₁₀-Arylcarbonyl oder C₆- bis C₁₀-Arylsulfonyl stehen,
oder
R¹ und R² gemeinsam mit dem N-Atom an welches sie gebunden sind, für einen 5- bis 7-gliedrigen gesättigten heterocyclischen Ring stehen, der zusätzlich weitere Heteroatome aus der Reihe O, S, SO₂ oder NR¹² enthalten kann, wobei
R¹² die Bedeutung von R¹ oder R² hat und
R³ für jeweils gegebenenfalls durch C₁-C₄-Alkyl, Hydroxy, C₁-C₄-Alkoxy, Halogen, Cyano oder Nitro substituiertes C₁- bis C₆-Alkyl, C₆- bis C₁₀-Aryl oder C₆- bis C₁₀-Aryl-C₁-C₆-alkyl steht,
eingesetzt wird. Das erfindungsgemäße Verfahren eignet sich insbesondere zum Färben und/oder Bedrucken von Baumwolle, Papier und Leder. Weiterhin können die Farbstoffe der Formel (I) besonders vorteilhaft zur Herstellung von Tinten, insbesondere solchen die für Tintenstrahlaufzeichnungsgeräte (Ink-Jet) geeignet sind, eingesetzt werden.

Von den Stilbenazofarbstoffen der Formel (I) eignen sich bevorzugt diejenigen zur Durchführung des erfindungsgemäßen Verfahrens, worin
- X und Y: unabhängig voneinander für -CN, -NO₂, -NH₂, -NHCOR³, -NHCOOR³, -NHCONHR³ oder -N=N-R stehen, wobei mindestens einer der Reste X oder Y für -N=N-R steht,
- R: für einen Rest 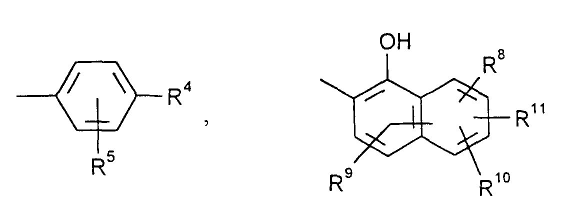 oder 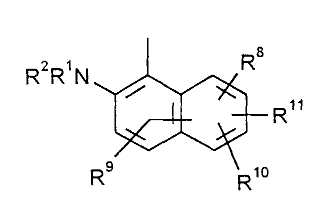 steht, wobei
R¹, R², R⁴, R⁵, R⁸, R⁹, R¹⁰ und R¹¹ die oben angegebene Bedeutung haben.

Besonders bevorzugt sind diejenigen Stilbenazofarbstoffe der Formel (I) zur Durchführung des erfindungsgemäßen Verfahrens, worin
- X und Y: unabhängig voneinander für -N=N-R stehen,
wobei
R für einen Rest der Formel 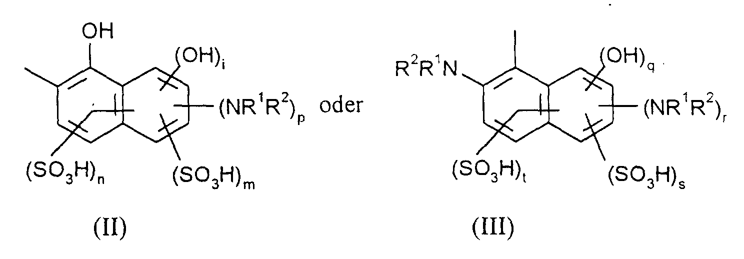 worin
i, m, n, p, q, r, s und t unabhängig voneinander für 0 oder 1 stehen, wobei die Summen m + n = 1 und s + t = 1 sind,
und
R¹ und R² die oben angegebene Bedeutung haben,
steht.

Ganz besonders bevorzugt sind Silbenazofarbstoffe der Formel (I)
worin
- X und Y: unabhängig voneinander für -N=N-R stehen,
wobei
- R: für einen Rest der Formel (II) oder (III) steht,
worin
- R¹ und R²: unabhängig voneinander für Wasserstoff, für gegebenenfalls durch Hydroxy, Methoxy, Ethoxy, Amino, Methylamino, Ethylamino, Dimethylamino, Diethylamino, Morpholino, Piperazino, N-Ethylpiperazino, N-Hydroxyethylpiperazino, N-Aminoethylpiperazino, Fluor, Chlor, Carboxy oder OSO₃H substituiertes C₁- bis C₆-Alkyl, für jeweils gegebenenfalls durch Hydroxy, Methoxy, Ethoxy, Fluor, Chlor oder Phenyl substituiertes C₁- bis C₆-Alkylcarbonyl, C₁ - bis C₆-Alkylsulfonyl, C₁- bis C₆-Alkoxycarbonyl oder C₁- bis C₆-Mono- oder -Dialkylaminocarbonyl, für Cyclopentyl oder Cyclohexyl, oder für jeweils gegebenenfalls durch Methyl, Ethyl, Hydroxy, Methoxy, Ethoxy, Fluor, Chlor, Amino, Cyano, Nitro, Carboxy, Aminocarbonyl oder Sulfo substituiertes Phenyl, Naphthyl, Benzoyl, Naphthylcarbonyl, Benzolsulfonyl oder Naphthalinsulfonyl stehen
oder
- R¹ und R²: gemeinsam mit dem N-Atom, an welches sie gebunden sind, für Morpholino, Piperazino, N-Ethylpiperazino, N-Hydroxyethylpiperazino, N-Aminoethylpiperazino oder 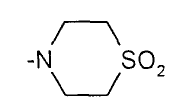 stehen,
- n, p, q und s: für 1 stehen und
- m, i, r und t: unabhängig voneinander für 0 oder 1 stehen.

Insbesondere bevorzugt ist die erfindungsgemäße Verwendung von Stilbenazofarbstoffen der Formel (I), worin
- X und Y: gleich sind und vorzugsweise für -N=N-R stehen, wobei R die oben angegebene Bedeutung hat.

Weiterhin besonders bevorzugt zur Durchführung des erfindungsgemäßen Verfahrens sind Stilbenazofarbstoffe der Formel (I), worin
- X: für einen Rest der Formel (IV) steht, welcher in Form seiner freien Säure der Formel 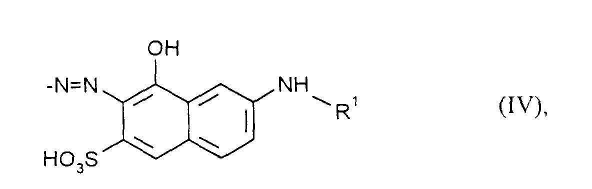 entspricht,
worin
R¹ für Wasserstoff, Phenyl, Methoxyphenyl, Hydroxyethoxyphenyl, Carboxyphenyl, Dicarboxyphenyl oder Sulfophenyl steht, und
Y für einen Rest der Formel (IVa), (V), (VI) oder (VII) steht, welcher in Form der freien Säure der Formel 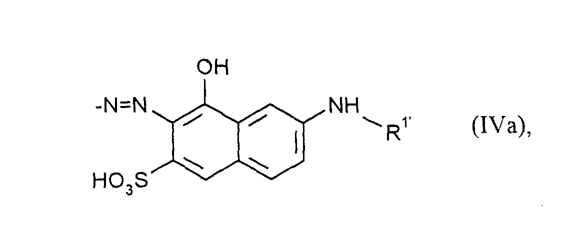 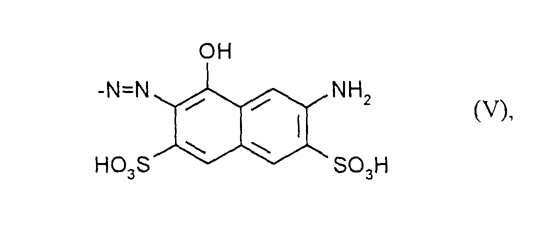 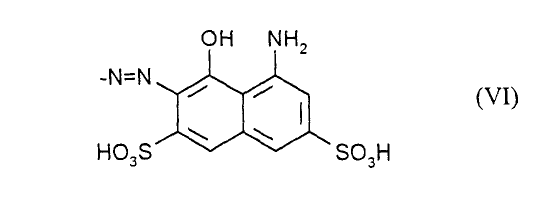 oder 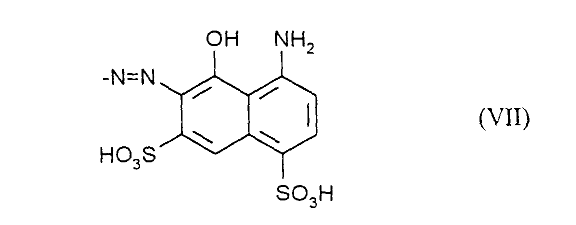 entspricht,
wobei R^{1'} die gleiche Bedeutung wie R¹ hat, vorzugsweise R¹ und R^{1'} aber nicht gleich sind, falls X für einen Rest (IV) und Y für einen Rest (IVa) steht.

Die Stilbenazofarbstoffe der Formel (I) können einzeln oder in beliebiger Mischung untereinander im erfindungsgemäßen Verfahren zum Einsatz kommen.

So läßt sich durch die Wahl einer geeigneten Farbstoffmischung die Farbnuance leicht in gewünschter Weise einstellen. Außerdem weisen solche Mischungen in der Regel bessere Löslichkeiten auf, die die Herstellung stabiler Farbstofflösungen oder Tinten erleichtern.

Stilbenazofarbstoffe, die in Form ihrer freien Säure der Formel (I) entsprechen, worin
- X: für einen Rest der Formel (VIII) oder (IX), wiedergegeben in Form ihrer freien Säure 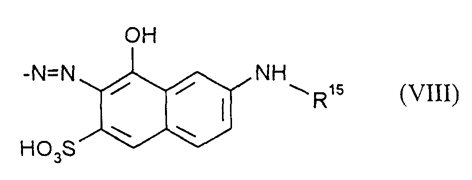 oder 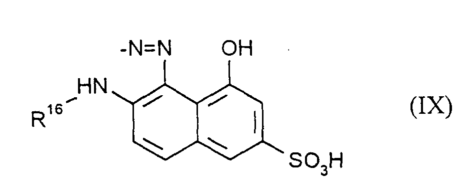 steht,
und
- Y: für einen Rest der Formel (VIIIa), (X), (XI) oder (XII), wiedergegeben in Form ihrer freien Säure 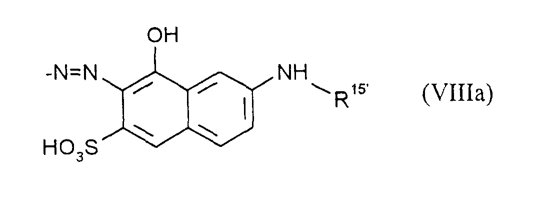 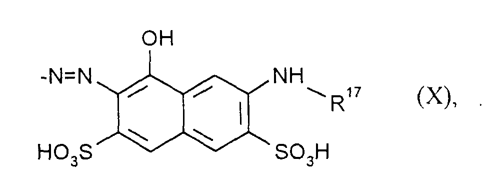 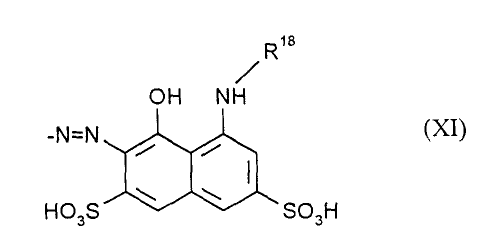 oder 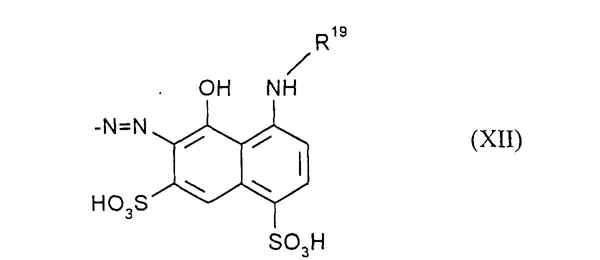 steht,
worin
- R¹⁵, R^{15'} und R¹⁷: unabhängig voneinander für Wasserstoff, C₁- bis C₆-Alkyl, ω-Dimethyl- oder Diethylamino-C₃- bis C₅-alkyl, ω-Carboxy-C₂- bis C₁₅-alkyl, Formyl, C₁- bis C₆-Alkylcarbonyl oder für jeweils gegebenenfalls durch Methyl, Ethyl, Hydroxy, Methoxy, Ethoxy, Chlor, Brom, Cyano, Nitro, Carboxy oder Sulfo substituiertes Phenyl oder Benzoyl stehen,
- R¹⁶: für Wasserstoff, C₁-C₆-Alkyl oder gegebenenfalls durch Methyl, Ethyl, Hydroxy, Methoxy, Ethoxy, Chlor, Brom, Cyano, Nitro, Carboxy oder Sulfo substituiertes Phenyl steht und
- R¹⁸ und R¹⁹: unabhängig voneinander für Wasserstoff, Formyl, C₁- bis C₆-Alkylcarbonyl oder gegebenenfalls durch Methyl, Ethyl, Hydroxy, Methoxy, Ethoxy, Chlor, Brom, Cyano, Nitro, Carboxy oder Sulfo substituiertes Benzoyl stehen,
wobei im Falle, daß X für einen Rest der Formel (VIII) und Y für einen Rest der Formel (VIIIa) steht und R^{15'} und R¹⁵ gleich sind, diese nicht gleichzeitig für Acetyl, Phenyl, Benzoyl oder 4-Chlorphenyl stehen,
sind neu und ebenfalls Gegenstand der Erfindung.

Hervorgehoben sind solche Stilbenazofarbstoffe der Formel (I), worin X der Formel (VIII) entspricht mit R¹⁵ = Wasserstoff, Phenyl, Methylphenyl, Methoxyphenyl, Carboxyphenyl oder Sulfophenyl und Y einer der Formeln (X) bis (XII) entspricht mit R¹⁷ = Wasserstoff, Acetyl, Phenyl oder Benzoyl und R¹⁸ = R¹⁹ = Wasserstoff, Acetyl oder Benzoyl.

Bevorzugt sind weiterhin Stilbenazofarbstoffe der Formel (Ia)

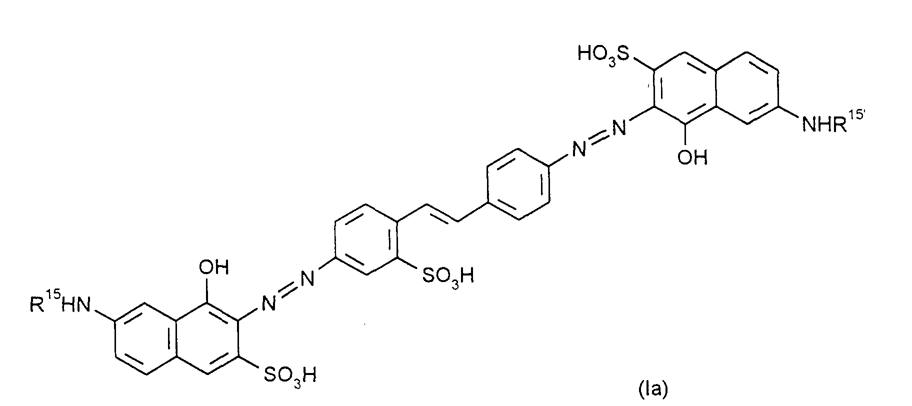

Besonders hervorgehoben sind solche Stilbenazofarbstoffe der Formel (Ia), worin R^{15'} und R¹⁵ gleich sind und für Wasserstoff, Methylphenyl, Methoxyphenyl, Carboxyphenyl oder Sulfophenyl stehen.

Ebenfalls hervorgehoben sind solche Stilbenazofarbstoffe der Formel (Ia), worin R¹⁵ für Wasserstoff, Phenyl, Methylphenyl oder Methoxyphenyl und R^{15'} für Carboxyphenyl oder Sulfophenyl steht.

Die genannten Alkylgruppen, auch solche in abgeleiteten oder zusammengesetzen Begriffen wie Alkoxy, Alkylamino, Alkoxycarbonyl, Alkylaminocarbonyl, Alkylcarbonyl oder Alkylsulfonyl können geradkettig oder verzweigt und gegebenenfalls durch Reste wie z.B. Hydroxy, C₁- bis C₄-Alkoxy, Halogen, Cyano, Carboxy, Sulfo, OSO₃H und/oder NR¹R² substituiert sein.

Aryl bedeutet vorzugsweise Phenyl oder Naphthyl.

Unter Halogen soll insbesondere Fluor, Chlor oder Brom verstanden werden.

Die neuen Stilbenazofarbstoffe lassen sich analog zu der in EP-A 0 376 032 beschriebenen Verfahrensweise herstellen.

So erfolgt die Herstellung beispielsweise durch Tetrazotierung der 4,4'-Diaminostilben-2-sulfonsäure der Formel 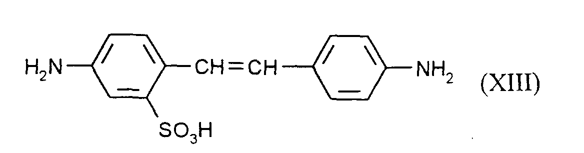 und kuppeln auf Naphthalinverbindungen der Formeln 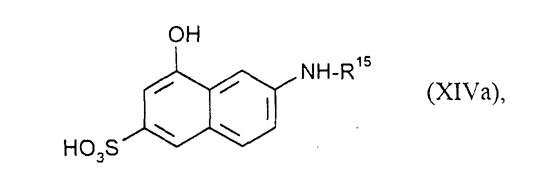 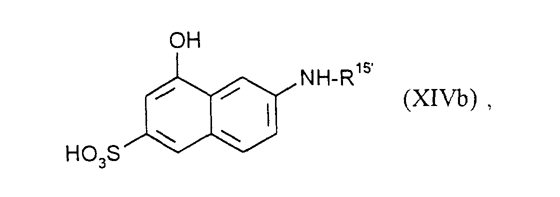 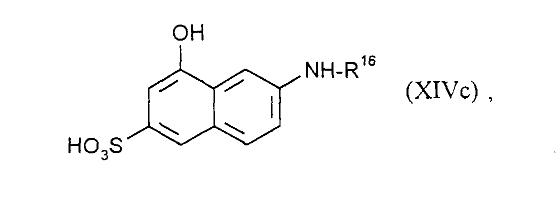 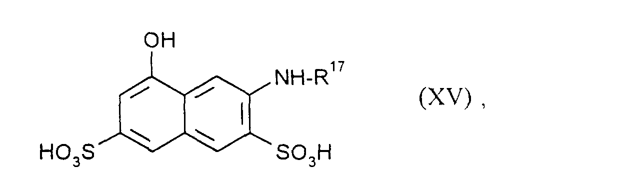 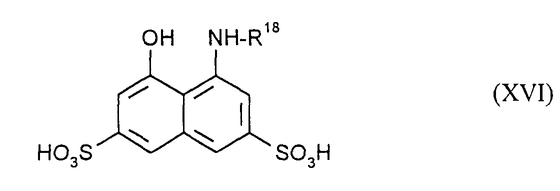 oder 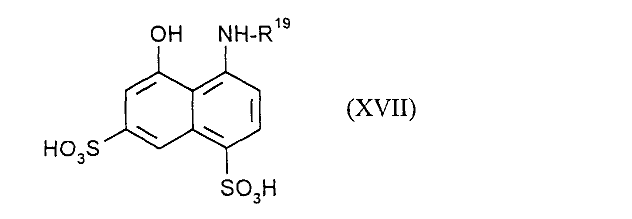 wobei R¹⁵, R^{15'}, R¹⁶, R¹⁷, R¹⁸ und R¹⁹ die oben angegebenen Bedeutungen haben,
oder Mischung davon.

Die Herstellung kann aber auch erfolgen durch Diazotierung von 4-Amino-stilben-2- oder -2'-sulfonsäuren der Formel 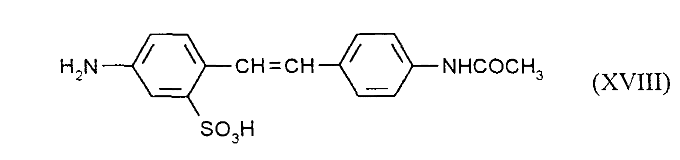 oder 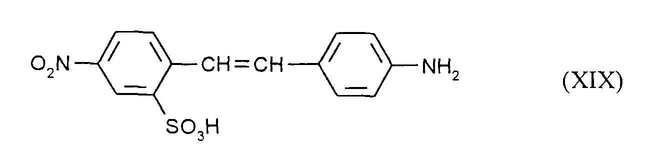 und kuppeln auf Naphthalinverbindungen der Formeln (XIVa-c), (XV), (XVI) oder (XVII), anschließende Verseifung der Acetaminogruppe beispielsweise in wäßriger Salzsäure bzw. Reduktion der Nitrogruppe beispielsweise mit NaHS in Wasser, erneute Diazotierung und Kupplung auf eine Napthalinverbindung der Formel (XIVa-c bis XVII).

Die Diazotierung oder Tetrazotierung erfolgt beispielsweise in Wasser in Gegenwart von Salz- oder Schwefelsäure und Natriumnitrit bei 0-10°C. Die Kupplung erfolgt normalerweise im sodaalkalischen Milieu, bei (XIVc) im sauren Milieu bei pH = 1 - 4 in Wasser.

Die Stilbenazofarbstoffe der Formel (I) werden erfindungsgemäß zum Färben und/oder Bedrucken von hydroxyl- und/oder amidgruppenhaltigen Substraten eingesetzt und färben cellulosehaltige Materialien, insbesondere Papier, Baumwolle und Viskose sowie Leder in schwarzen, grünen, blauen oder roten Farbtönen mit guten Naß- und Lichtechtheiten.

Die Farbstoffe (I) können erfindungsgemäß nach allen in der Papier- und Textilindustrie für substantive Farbstoffe gebräuchlichen Verfahren verwendet werden, insbesondere in der Masse- wie in der Oberflächenfärbung von Papier für geleimte oder ungeleimte Sorten, ausgehend von gebleichtem oder ungebleichtem Zellstoff verschiedener Provenienz wie Nadel- oder Laubholzsulfit- und/oder - sulfat-Zellstoff. Sie können auch in der Garn- und Stückfärberei von Baumwolle, Viskose und Leinen nach dem Ausziehverfahren aus langer Flotte oder im Kontinueverfahren angewandt werden sowie zum Färben von Leder beispielsweise im Faßverfahren.

Solche Färbeverfahren sind bekannt aus beispielsweise Ullmann's Encyclopedia of Industrial Chemistry, VCH Verlagsgesellschaft mbH, 5^{th} edition, Vol. A15, p. 259 (1990); Vol. A18, p. 545 (1991) und Vol. A26, p. 351 (1995).

Bei der Massefärbung von Papier wird im allgemeinen so vorgegangen, daß einer wäßrigen Aufschlämmung der Faserstoffe (ca. 0,3-%ig, Holzschliff oder bevorzugt Zellstoff) der Farbstoff fest oder als wäßrige Lösung zugesetzt wird (beispielsweise 0,05 bis 3-%ig, bezogen auf Fasern). Dieser Aufschlämmung werden in der Regel zugesetzt: Füllstoffe wie Calciumcarbonat, Kaolin; Leimungsmittel wie Harze, Aluminiumsulfat oder Alaun; Hilfsmittel zur Beschleunigung der Entwässerung, zur Verbesserung der Naßfestigkeit. Auf der Papiermaschine wird dieser Stoffbrei über ein Sieb abgesaugt und anschließend getrocknet.

Die Oberflächenfärbung von Papier erfolgt üblicherweise in der Leimpresse. Der wäßrigen Beschichtungsmasse, die gegebenenfalls Füllstoffe, wie Calciumcarbonat, Kaolin, Titanoxid; Bindemittel und andere Hilfsmittel enthält, wird der Farbstoff zugesetzt. Das Papier wird in der Leimpresse damit beschichtet, getrocknet und eventuell zwischen Walzen geglättet.

Die Färbung von Leder nach dem Faßfärbeverfahren erfolgt in Fässern oder rotierenden Kesseln. Bezogen auf das Leder wird in der 1- bis 3-fachen Menge Färbeflotte bei Temperaturen bis 60°C gefärbt. Die Flotte kann neben den Farbstoffen auch anionische Hilfsmittel zur Verbesserung der Egalität, nichtionische Detergentien, Säuren oder Basen zur Steuerung des Aufziehvermögens und eventuell weitere Zusätze enthalten. Nach der Färbung wird abgesäuert, z.B. mit 1-2 % Ameisen-, Essig- oder Milchsäure, und getrocknet.

Die Färbung von Baumwolle erfolgt üblicherweise nach dem Ausziehverfahren. Die wäßrige Färbeflotte enthält neben dem Farbstoff im allgemeinen Salze wie Natriumchlorid oder Natriumsulfat. Gefärbt wird in der Regel im schwach sauren pH-Bereich bei Temperaturen von 80-95°C oder unter Druck bei 130°C. Anschließend wird in Stufen abgekühlt und mit kaltem Wasser gewaschen.

Alternativ kann Baumwolle nach dem Kontinueverfahren gefärbt werden, wobei das Gewebe mit einer Farbstofflösung getränkt, abgepreßt und anschließend beispielsweise im Dampfstrom oder in einem heißen Salzbad (80-90°C) fixiert wird.

Die Stilbenazofarbstoffe der Formel (I) können als feste oder flüssige Farbstoffpräparationen erfindungsgemäß für die jeweiligen Färbeverfahren eingesetzt werden. Sie werden vorzugsweise in Form von wäßrigen Präparationen, insbesondere von Lösungen eingesetzt. Diese wäßrigen Farbstoffpräparationen enthalten im allgemeinen einen oder mehrere Farbstoffe der Formel (I), gegebenenfalls weitere anionische substantive Farbstoffe zur Einstellung der Nuance, gegebenenfalls geeignete organische Lösungsmittel, wozu auch hydrotrope Verbindungen zählen können, sowie weitere Hilfsmittel und/oder Stabilisatoren. Es ist vorteilhaft, die wäßrigen Farbstofflösungen im Zuge der Farbstoffsynthese selbst, ohne Zwischenisolierung des Farbstoffs, herzustellen.

Die Anwendung in Form der wäßrigen Farbstoffpräparationen ist insbesondere beim Färben oder Bedrucken von Papier bevorzugt. Die Herstellung einer stabilen, wäßrig konzentrierten Färbepräparation kann auf allgemein übliche Weise erfolgen, z.B. durch Lösen des Farbstoffs in Wasser gegebenenfalls unter Zugabe eines oder mehrerer Hilfsmittel, z.B. einer hydrotropen Verbindung oder eines Stabilisators.

Die erfindungsgemäßen wäßrigen Farbstoffpräparationen enthalten 1 bis 15 Gew.-% eines oder mehrerer Farbstoffe der Formel (I) und 80 bis 99,5 Gew.-% Wasser und/oder Lösungsmittel sowie gegebenenfalls weitere übliche Bestandteile.

Bevorzugte organische Lösungsmittel sind dabei Alkohole und deren Ether oder Ester, Carbonsäureamide, Harnstoffe, Sulfoxide und Sulfone, insbesondere solche mit Molekulargewichten <200. Besonders geeignete Lösungsmittel sind beispielsweise Methanol, Ethanol, Propanol, Isopropanol; Ethylen-, Propylen-, Diethylen-, Thiodiethylen-, Dipropylen-, Pentamethylen-, Triethylen- und Polyethylenglykol; Butandiol, 1,5-Pentandiol, 1,2-Dihydroxypropan; Glycerin, 1,3,6-Hexantriol; β-Hydroxypropionitril; Ethylenglykolmonoethyl- und -propylether, Ethylendiglykolmonoethylether, Triethylenglykolbutylether, Butylpolyglykol, 1-Methoxy-2-propanol, 2-Methoxy-1-propanol; Formamid, N,N-Dimethylformamid, Pyrrolidon, ε-Caprolactam, N-Methyl-caprolactam, Butyrolacton, Caprolacton; Essigsäure-2-hydroxyethylester, Essigsäure-2-(2'-hydroxy)-ethylester, Glycolacetat; Harnstoff, Tetramethylharnstoff, 1,3-Dimethyl-2-imidazolidinon, N,N-Dimethylolpropylenharnstoff; Dimethylsulfoxid, Dimethylsulfon, Sulfolan.

Als weitere für wäßrige Farbstoffpräparationen, insbesondere für Drucktinten übliche Zusätze kommen solche ionischen oder nichtionischen Stoffe in Frage, mit denen die Viskosität und/oder Oberflächenspannung in die für die Anwendung erforderlichen Bereiche eingestellt werden kann, wie beispielsweise anionische, kationische oder neutrale Tenside wie Dispergiermittel und Viskositätsregulatoren. Die Funktion von Viskositätsregulatoren kann beispielsweise von den organischen Lösungsmitteln übernommen werden.

Die erfindungsgemäßen Farbstoffpräparationen können auch weitere Farbstoffe enthalten, die nicht der Formel (I) entsprechen.

Bevorzugt sind wäßrige Farbstoffpräparationen, insbesondere Farbstofflösungen, enthaltend
- 1 bis 15 Gew.-% eines oder mehrerer Farbstoffe, wobei mindestens einer der Formel (I) entspricht,
- 50 bis 99,5 Gew.-%, insbesondere 85 bis 99 Gew.-% Wasser,
- 0 bis 30 Gew.-%, insbesondere 0 bis 20 Gew.-% eines oder mehrerer organischer Lösungsmittel,
- 0 bis 30 Gew.-%, insbesondere 0 bis 10 Gew.-% die Viskosität und/oder die Oberflächenspannung beeinflussende Zusätze,
wobei sich die Summe der genannten Inhaltsstoffe auf 100 Gew.-% ergänzt.

Die wäßrigen Farbstoffpräparationen können durch Auflösen der Farbstoffsalze der Formel (I) in Wasser oder durch direkten Einsatz der Syntheselösungen, die gegebenenfalls zuvor einem Ionenaustauschverfahren und/oder einem Membrantrennverfahren, z.B. einer Entsalzung durch Druckpermeation, unterworfen wurden, und/oder durch Zusatz eines oder mehrerer der obengenannten organischen Lösungsmittel und/oder Zusätze bei einer Temperatur von beispielsweise 20 bis 100°C, gegebenenfalls bei erhöhten Temperaturen von 30 bis 100°C, insbesondere 30 bis 50°C, und unter Zusatz von anorganischen und/oder organischen Basen hergestellt werden.

Anstelle der Salze der Farbstoffe (I) können auch die entsprechenden freien Säuren in Kombination mit mindestens äquimolaren Mengen der entsprechenden organischen und/oder anorganischen Basen eingesetzt werden.

Als anorganische Basen können z.B. Lithium-, Natrium- oder Kaliumhydroxid, Lithium-, Natrium- oder Kaliumcarbonat eingesetzt werden.

Als organische Basen können z.B. Ethanolamin, Diethanolamin, Triethanolamin, N-Methylethanolamin, N,N-Dimethylethanolamin, N-Methyldiethanolamin, 1-Amino-2-propanol, 2-Amino-1-propanol, Di-isopropanolamin, N-2-Hydroxyethyldiisopropanolamin, N,N,N-Tris-[2-(2'-hydroxyethoxy)-ethyl]-amin, Tetramethylammoniumhydroxid oder Natriummethylat, Lithiummethlyat, Kalium-tert.-butylat dienen.

Die erfindungsgemäßen wäßrigen Farbstoffpräparationen eignen sich weiterhin zur Herstellung von Drucktinten, die insbesondere auch als Aufzeichnungsflüssigkeiten nach der Ink-jet-Methode eingesetzt werden können.

Ein weiterer Gegenstand der Erfindung sind daher Drucktinten enthaltend mindestens einen Stilbenazofarbstoff der Formel (I) sowie deren Verwendung als Aufzeichnungsflüssigkeiten für Ink-jet-Aufzeichnungssysteme. Eine bevorzugte Form enthält solche Farbstoffe der Formel (I), Mischungen solcher Farbstoffe der Formel (I) oder Mischungen von Farbstoffen der Formel (I) mit anderen Farbstoffen, die geeignet sind, schwarze Drucke zu erzeugen.

Unter der Ink-jet-Methode des erfindungsgemäßen Verfahrens wird ein Tintenstrahlaufzeichnungsverfahren verstanden, bei dem die Tintentropfen auf das Substrat gespritzt werden. Die feinen Tintentröpfchen können durch unterschiedliche Verfahren erzeugt werden. Bevorzugt werden sie nach den allgemein bekannten Thermal-Jet-, Bubble-Jet-, Piezo-Jet- oder Ventil-Ink-Jet-Verfahren erzeugt. Diese Verfahren sind beispielsweise von T.L. Dawson, Rev. Prog. Coloration, 22, 22 (1992) bekannt.

Bei der Verwendung der erfindungsgemäßen Farbstoffe in Form ihrer wäßrigen Präparationen, wie sie oben detailliert beschrieben sind, als Drucktinten für Ink-Jet-Aufzeichnungssysteme ergeben sich folgende Vorteile: Die physikalischen Eigenschaften wie Viskosität, Oberflächenspannung und dergleichen liegen in den geeigneten Bereichen; die Aufzeichnungsflüssigkeit verursacht keine Verstopfungen in den feinen Abgabeöffnungen von Tintenstrahl-Aufzeichnungs-Vorrichtungen; sie liefert Bilder von hoher optischer Dichte; bei der Lagerung kommt es in der Aufzeichnungsflüssigkeit nicht zu einer Veränderung der physikalischen Eigenschaften und/oder zur Ablagerung von festen Bestandteilen; die Aufzeichnungsflüssigkeit eignet sich zur Aufzeichnung auf verschiedenen Aufzeichnungsmedien ohne Beschränkungen hinsichtlich der Art der Aufzeichnungsmedien; die Aufzeichnungsflüssigkeit fixiert rasch und ergibt Bilder mit aufgezeichneter Wasserfestigkeit, Lichtechtheit, Abriebfestigkeit und Auflösung.

### Beispiele

Das in den Beispielen eingesetzte Wasser war in jedem Fall komplett entionisiert.

### Beispiel 1

6,45 g 4,4'-Diaminostilben-2-sulfonsäure als Dihydrochlorid (Herstellung siehe EP-A 0 376 032) wurden in 500 ml Wasser mit 40 gew.-%iger Natronlauge bei pH = 12,5 in Lösung gebracht und mit 8,5 ml Natriumnitritlösung (30 g NaNO₂ in 100 ml Lösung) versetzt. Diese Mischung dosierte man während 2 h bei 2 bis 5°C in eine Mischung aus 62 ml 32 gew.-%iger Salzsäure, 50 g Eis und 0,1 ml Natriumnitritlösung (10 g in 100 ml). 1 h wurde nachgerührt.

13,9 g 1-Hydroxy-7-(3-carboxyanilino)-naphthalin-3-sulfonsäure (91,6 %ig) wurden in einer Mischung aus 265 ml 20 gew.-%iger Sodalösung und 115 ml Wasser gelöst. Hierzu wurde obige Tetrazotierung während 2 h getropft. Zum Schluß war ein pH von 9,8 erreicht. Nach 1 h Nachrühren wurde abgesaugt. Man erhielt 52,5 g einer feuchten Paste des Farbstoffs der Formel (I) als Natriumsalz mit X = Y = Formel (IV) und

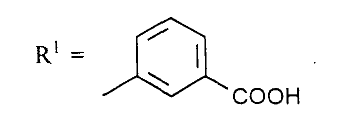

Diese Paste wurde in 500 ml Wasser gelöst und dreimal über ein Filter "blue ribbon 589^{3"} der Fa. Schleicher und Schüll filtriert.

Diese Lösung zeigte einen λₘₐₓ-Wert von 581 nm.

Ligninfreies Papier wurde in einem bläuchlichschwarzen Farbton in der Masse gefärbt mit ausgezeichneten Abwasserwerten und Naßechtheiten.

Anschließend wurde obige Lösung zweimal über ein Mikrofilter, zuerst über ein 1,2 µm-PTFE-Filter, dann über ein 0,2 µm-PTFE-Filter in einem Sartorius-Druckfiltergerät bei 8 bar filtriert. Diese Lösung wurde in eine leere und im Ultraschallbad gereinigte Tintenpatrone eines Hewlett-Packard-Deskjet-plus-Druckers gefüllt. Der Druck auf verschiedene kommerzielle Papiere war tiefschwarz mit sehr guten Wasserechtheiten.

### Beispiel 2

a) 32,0 g 4-Amino-4'-acetylaminostilben-2-sulfonsäure (Herstellung siehe EP-A 0 376 032) wurden in 1l Wasser bei 80°C durch Zusatz von 3 g Lithiumhydroxid gelöst und filtriert. Bei 80°C wurden 17 ml Natriumnitritlösung (30 g NaNO₂ in 100 ml wäßriger Lösung) zugesetzt. Diese Lösung wurde während 1 h in eine Mischung aus 100 ml 33 gew.-%ige Salzsäure, 1 l Eiswasser und 2 Tropfen obiger Natriumnitritlösung eingepumpt. Durch Zugabe von insgesamt 500 g Eis wurde die Temperatur bei 2 bis 5°C gehalten. Die Suspension wurde 1 h bei dieser Temperatur nachgerührt und anschließend während 2 h in eine Lösung von 26,6 g 1-Hydroxy-7-(4-methoxyanilino)-naphthalin-3-sulfonsäure-Na-Salz in einer Mischung aus 300 ml 20 gew.-%iger Sodalösung und 640 ml Eiswasser bei 2 bis 5°C eingepumpt. Über Nacht wurde nachgerührt, wobei die Temperatur allmählich auf Raumtemperatur anstieg. Die braunschwarze Suspension wurde abgesaugt. Man erhielt 125 g Paste der Formel (XX) (dargestellt in Form der freien Säure) 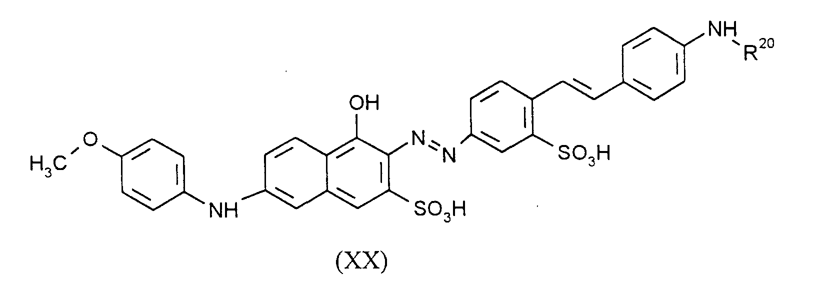 mit R²⁰ = Acetyl.
b) 125 g der unter a) erhaltenen Paste wurden in einer Mischung aus 250 ml Wasser und 50 ml 33 gew.-%iger Salzsäure 8 h bei 95°C gerührt. Anschließend wurde abgesaugt. Man erhielt 102 g einer Paste der Formel (XX) mit R²⁰ = Wasserstoff.
c) 102 g der unter b) erhaltenen Paste wurden in 500 ml Wasser durch Zusatz von festem Lithiumhydroxid in Lösung gebracht und auf pH 10,5 gestellt. 1l Eiswasser und 16,7 ml Natriumnitritlösung (30 g NaNO₂ in 100 ml wäßriger Lösung) wurden zugesetzt. Während 2 h wurde in eine Mischung aus 200 ml Eiswasser und 30 ml 33 gew.-%iger Salzsäure bei 2 bis 5°C gepumpt und 1 h bei dieser Temperatur gehalten. Diese Diazotierung wurde während 1,5 h zu einer Lösung von 31,7 g 7-Amino-1-hydroxynaphthalin-3,6-disulfonsäure (58 gew.-%ig) in 300 ml 20 gew.-%ige Sodalösung bei 2 bis 5°C gepumpt. Es wurde über Nacht gerührt und dabei die Temperatur auf Raumtemperatur kommen lassen. Die schwarze Lösung wurde mit 350 g Natriumchlorid versetzt und 1 h bei 70°C getempert. Nach Abkühlen auf Raumtemperatur wurde abgesaugt. Man erhielt 116 g Paste. Diese wurde in 700 ml Wasser bei 50°C gelöst und mit 160 g Natriumchlorid ausgesalzen. Nach dem Absaugen erhielt man 99 g Paste der Formel (I) mit X = Rest der Formel (IV), R¹ = 4-Methoxyphenyl und Y = Rest der Formel (V).
   Diese Paste wurde in 400 ml Wasser gelöst. Da über Nacht gallertartiges Produkt ausfiel, wurde mit 33 gew.-%iger Salzsäure auf pH = 1,0 eingestellt und abgesaugt. Man erhielt 96 g Paste, die erneut in 400 ml Wasser angeteigt und mittels festem Lithiumhydroxid durch Einstellen von pH = 8,0 in Lösung gebracht wurde. Die Lösung war stabil.
   Diese Lösung zeigte einen λₘₐₓ-Wert von 574 nm.
   Ligninfreies Papier wurde in der Masse in einem scharzen Farbton gefärbt mit ausgezeichneten Abwasserwerten und Naßechtheiten.
   100 g der obigen Lösung wurden mit einer Mischung aus 9,5 g 2-Pyrrolidon und 9,5 g 1,5-Pentandiol versetzt. Diese Lösung wurde über ein Filter "blue ribbon 589³" filtriert und anschließend mit einem Sartorius-Druckfiltergerät bei einem Druck von 8 bar nacheinander über PTFE-Mikrofilter-Membranen mit 5,0, 1,2, 0,54 und 0,2 um Porengröße filtriert. Der pH-Wert wurde durch Zusatz von festem Lithiumhydroxid auf 8,0 eingestellt.
   Diese Lösung wurde in eine leere und in einem Ultraschallbad gereinigte Tintenpatrone eines Hewlett-Packard-Deskjet-plus-Druckers gefüllt. Der Druck auf verschiedene kommerzielle Papiere war tiefschwarz mit sehr guten Wasserechtheiten.

### Beispiel 3

a) Es wurde wie in Beispiel 1 unter a) beschrieben tetrazotiert.
b) 7,1 g 1-Hydroxy-7-(3-carboxyanilino)-naphthalin-3-sulfonsäure und 4,7 g 1-Hydroxy-7-aminonaphthalin-3-sulfonsäure wurden in einer Mischung aus 160 ml 20 gew.-%iger Sodalösung und 300 ml Eiswasser gelöst. Hierzu tropfte während 2 h bei 0 bis 5°C obige Tetrazotierung, wobei am Schluß ein pH von 8,7 erreicht wurde. Es wurde abgesaugt. Man erhielt 37,5 g einer feuchten Paste einer Mischung von vier Farbstoffen der Formel (I) als Natriumsalz
   Farbstoff 1) X = Formel (IV) mit 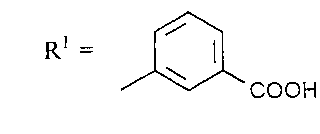 und Y = Formel (IVa) mit R^{1'} = Wasserstoff,
   Farbstoff 2) X = Formel (IV) mit R¹ = Wasserstoff und Y = Formel (IVa) mit 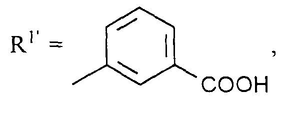
   Farbstoff 3) X = Y = Formel (IV) mit 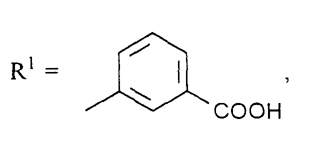
   Farbstoff 4) X = Y = Formel (IV) mit R¹ = Wasserstoff.

Diese Paste wurde in 400 ml Wasser angeschlagen und mit 20 ml 33 gew.-%iger Salzsäure auf pH = 0,8 gestellt. Nach 2 h bei Raumtemperatur wurde erneut abgesaugt. Man erhielt 76,2 g feuchte Paste. Diese Paste wurde in 200 ml Wasser unter Zusatz von Lithiumhydroxid bei pH = 9,5 bis 10 gelöst und mit einer Mischung aus 19 g 2-Pyrrolidon, 19 g 1,5-Pentandiol und 10 g Harnstoff versetzt. Diese Lösung wurde wie in Beispiel 1 beschrieben filtriert, mit Lithiumhydroxid auf pH = 9 eingestellt und verdruckt. Der Druck auf verschiedenen kommerziellen Papieren .war leicht blaustichig schwarz mit sehr guten Wasserechtheiten.

Ganz analog wurden die folgenden in Tabelle 1 aufgeführten Farbstoffe hergestellt.

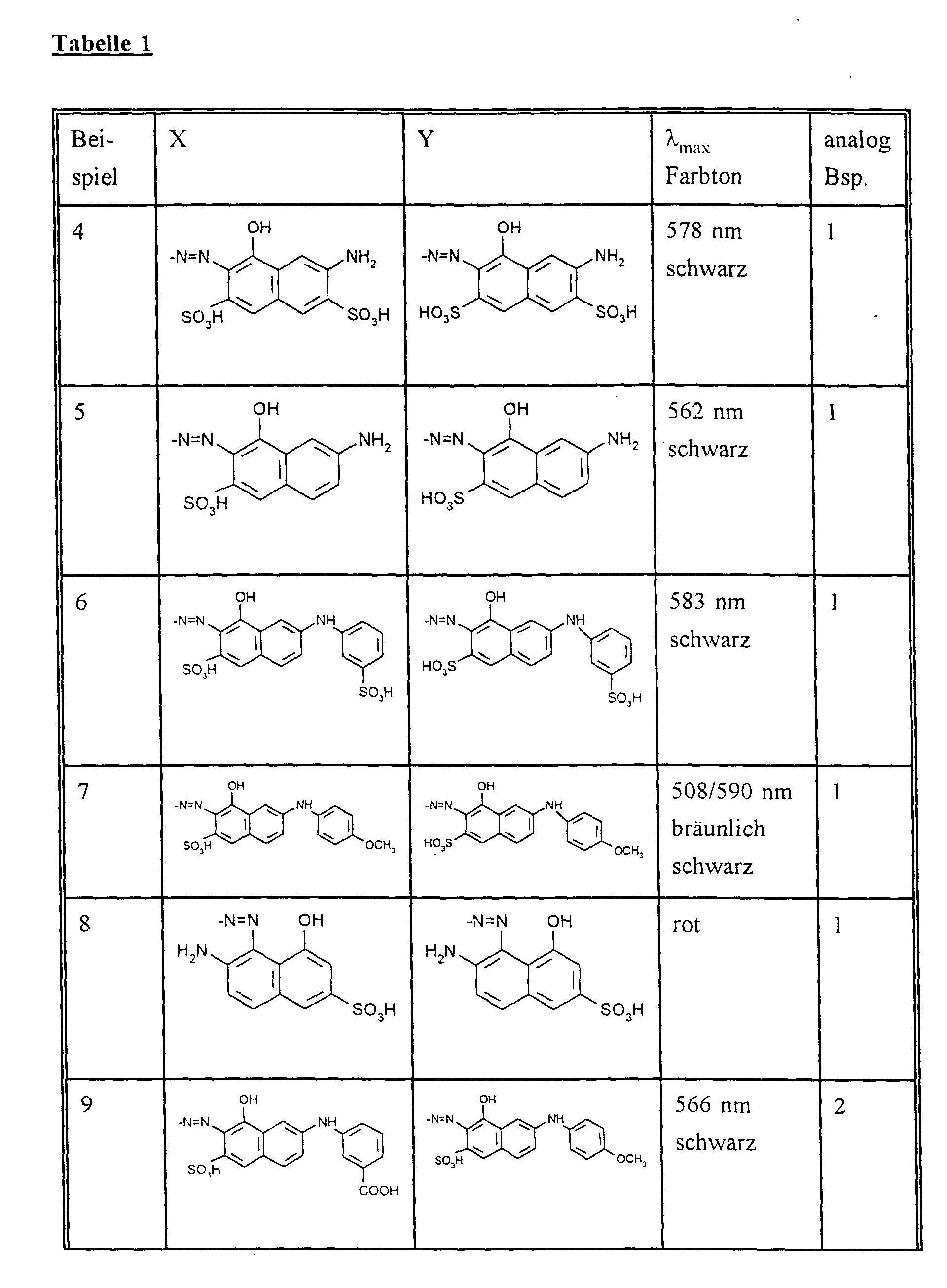

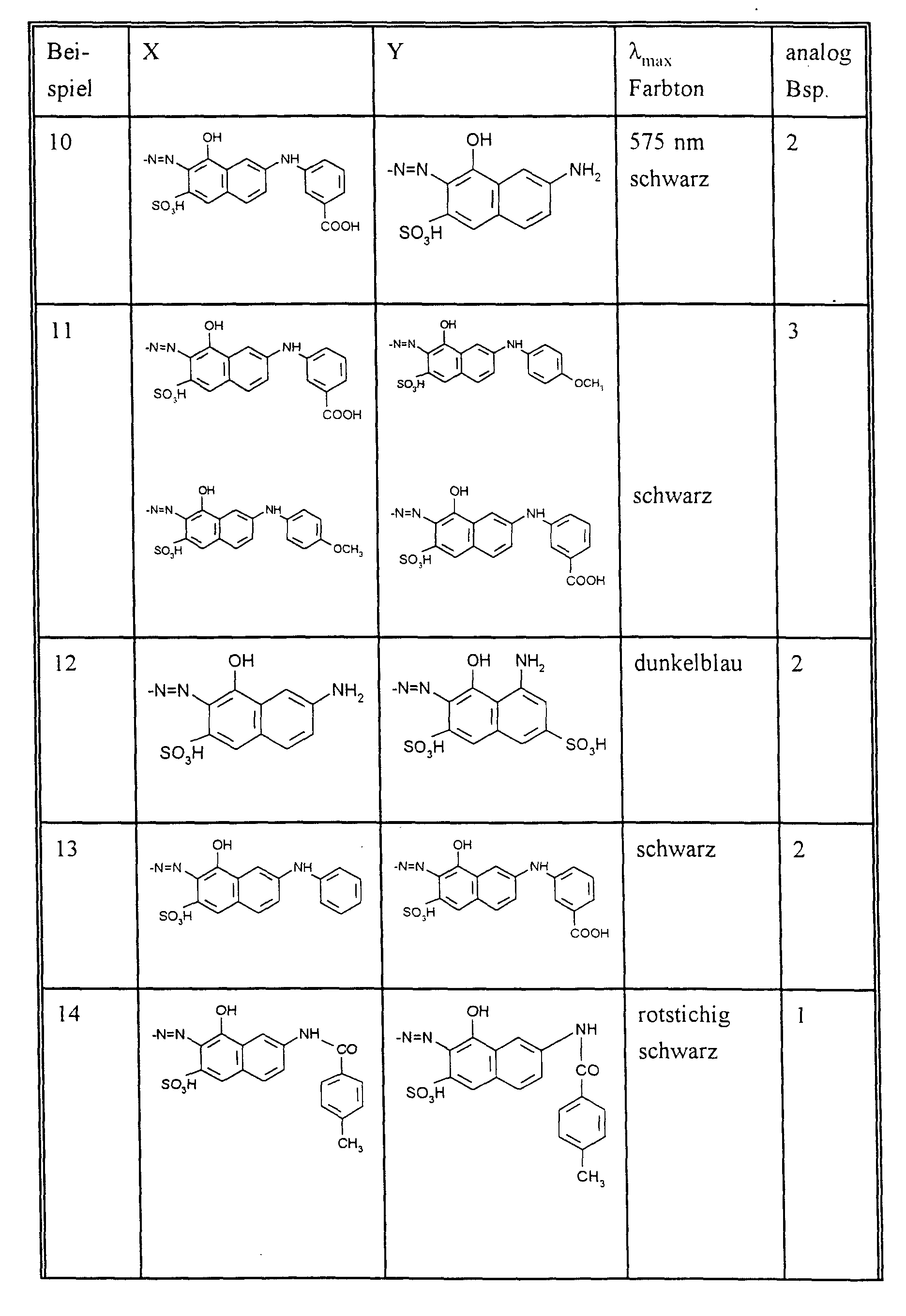

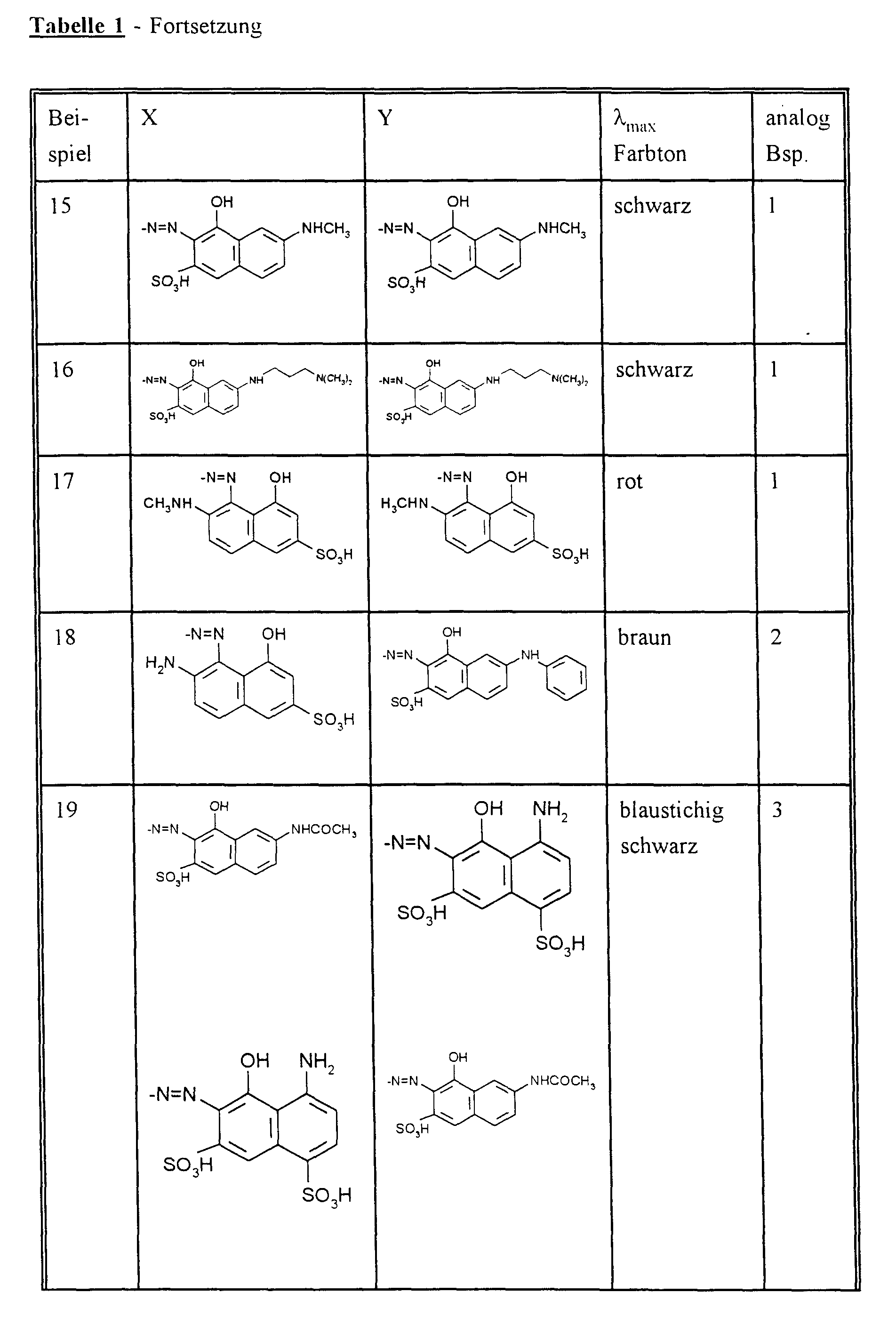

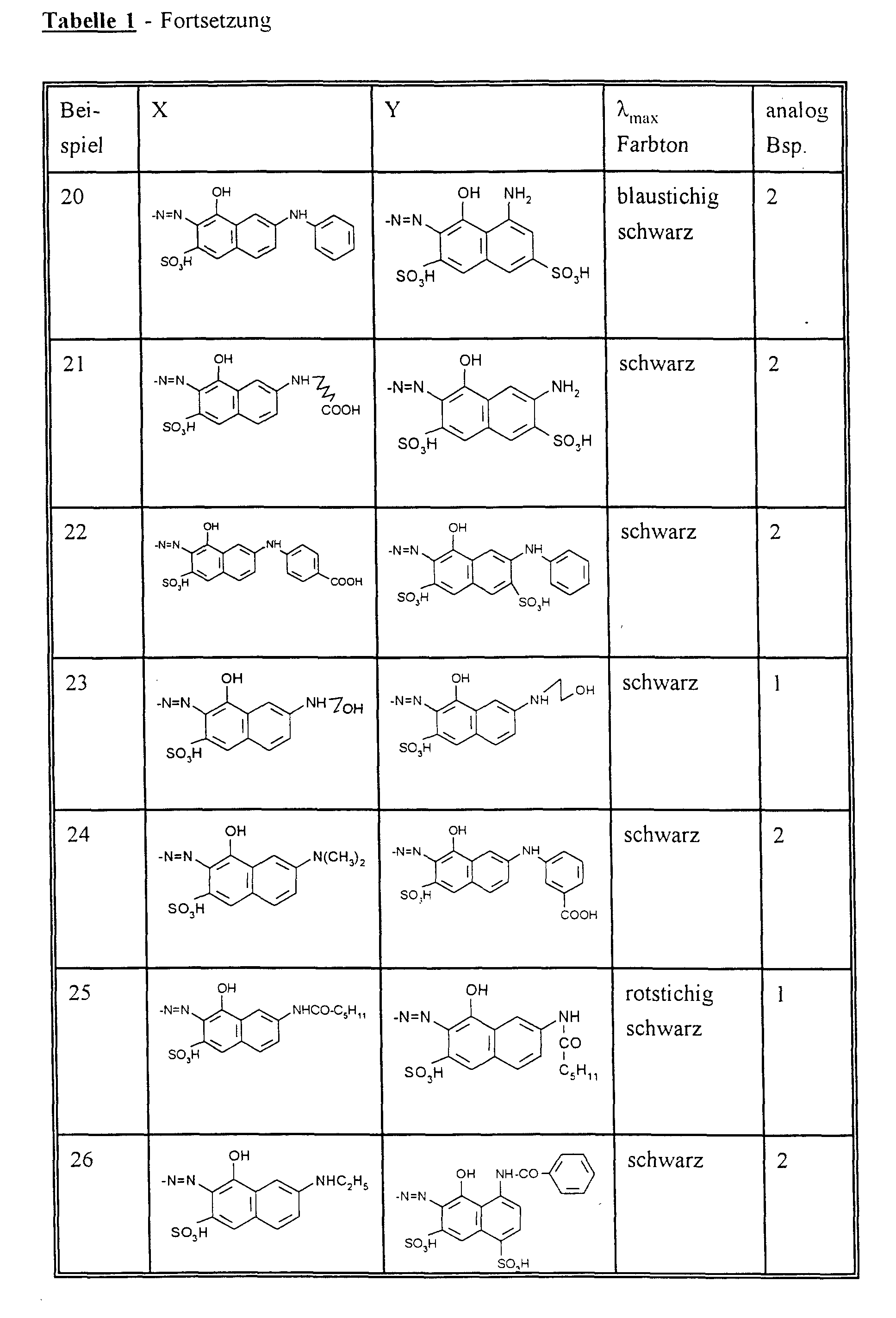

Analog zu Beispiel 1 wurde von diesen Farbstoffen der Beispiele 4 bis 26 eine Tinte hergestellt und verdruckt. Die Drucke waren in der Regel intensiv und wiesen gute Wasserechtheiten auf.

In der gleichen Weise konnte aus den in Tabelle 2 folgenden Farbstoffen eine Tinte hergestellt und verdruckt werden:

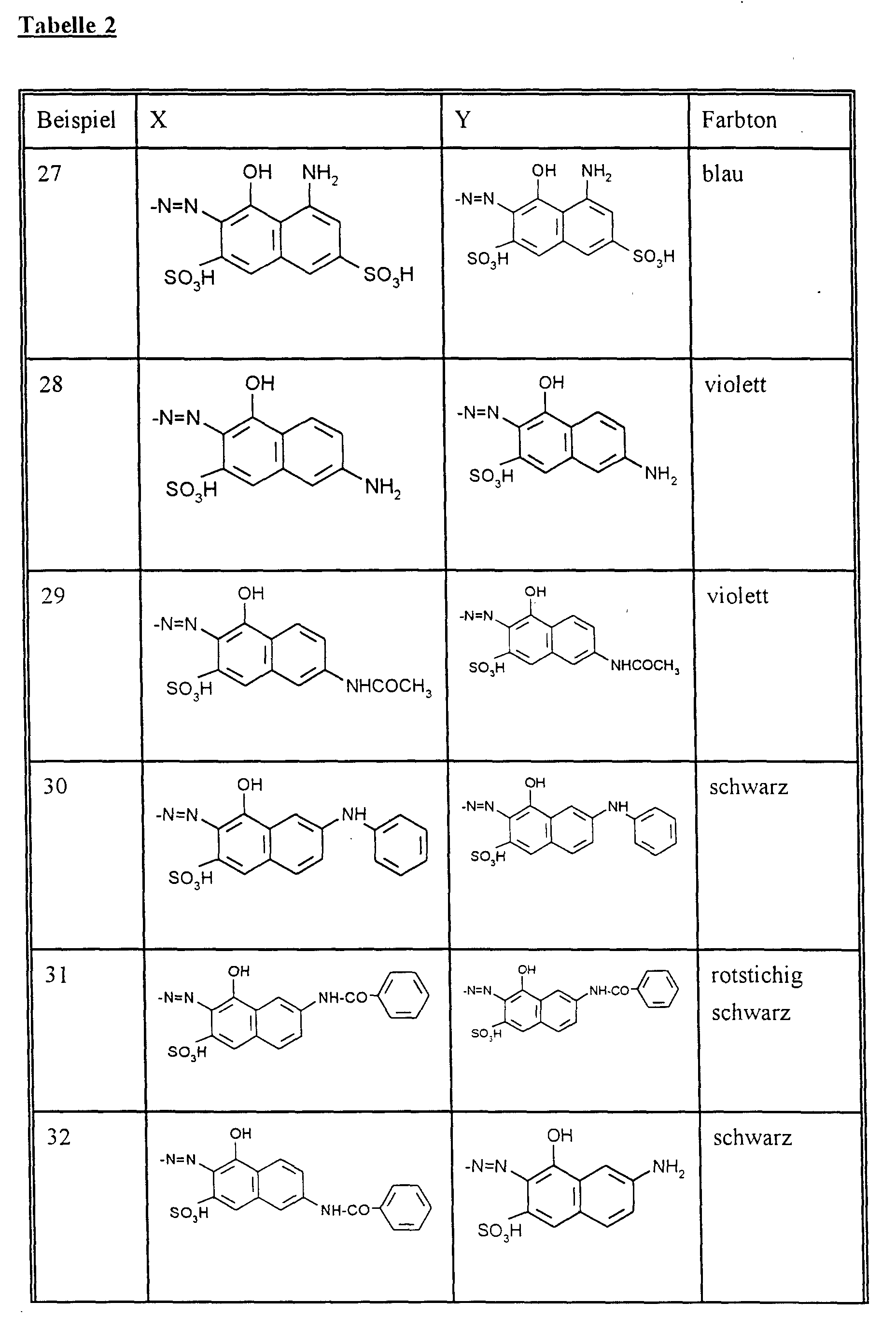

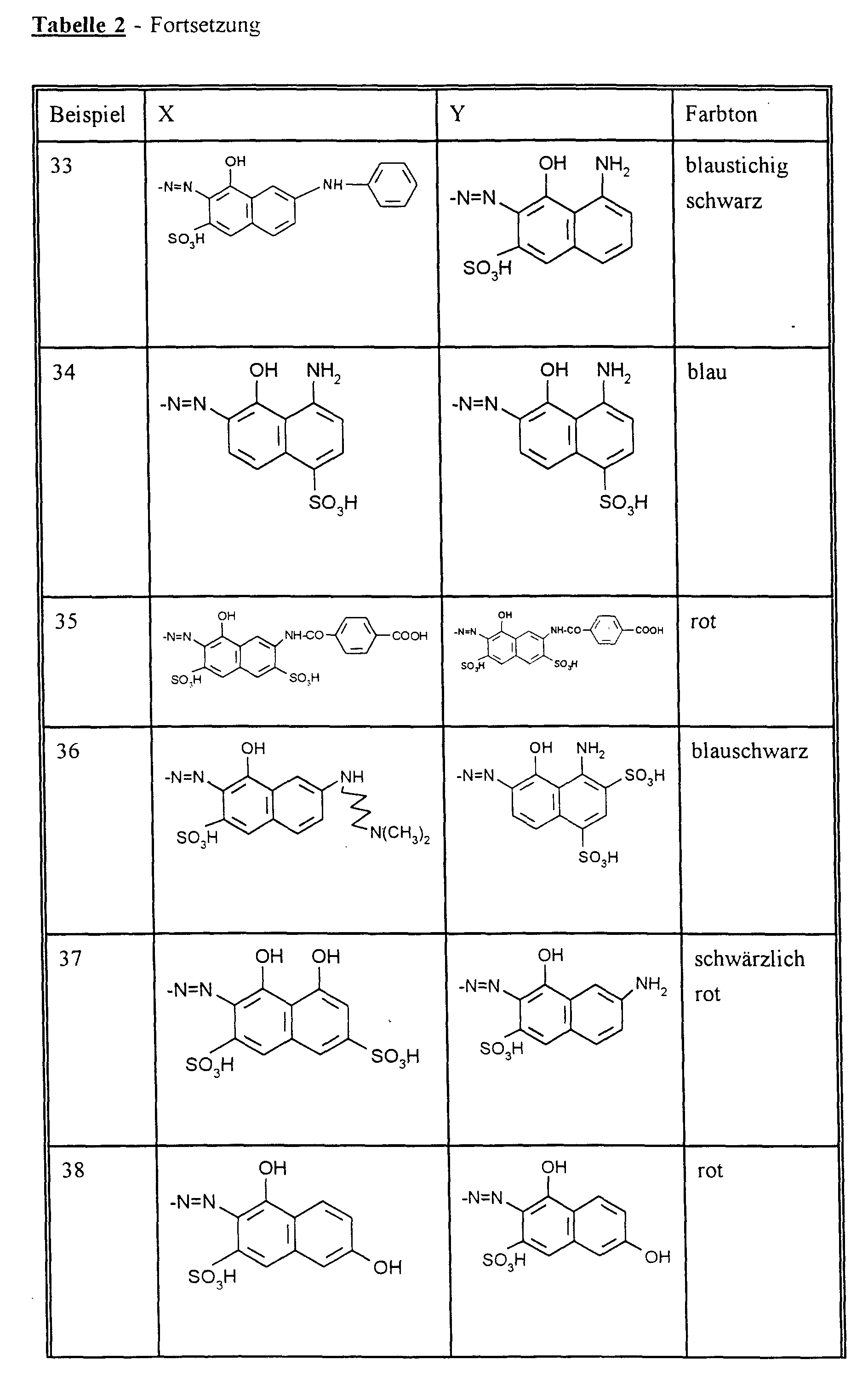

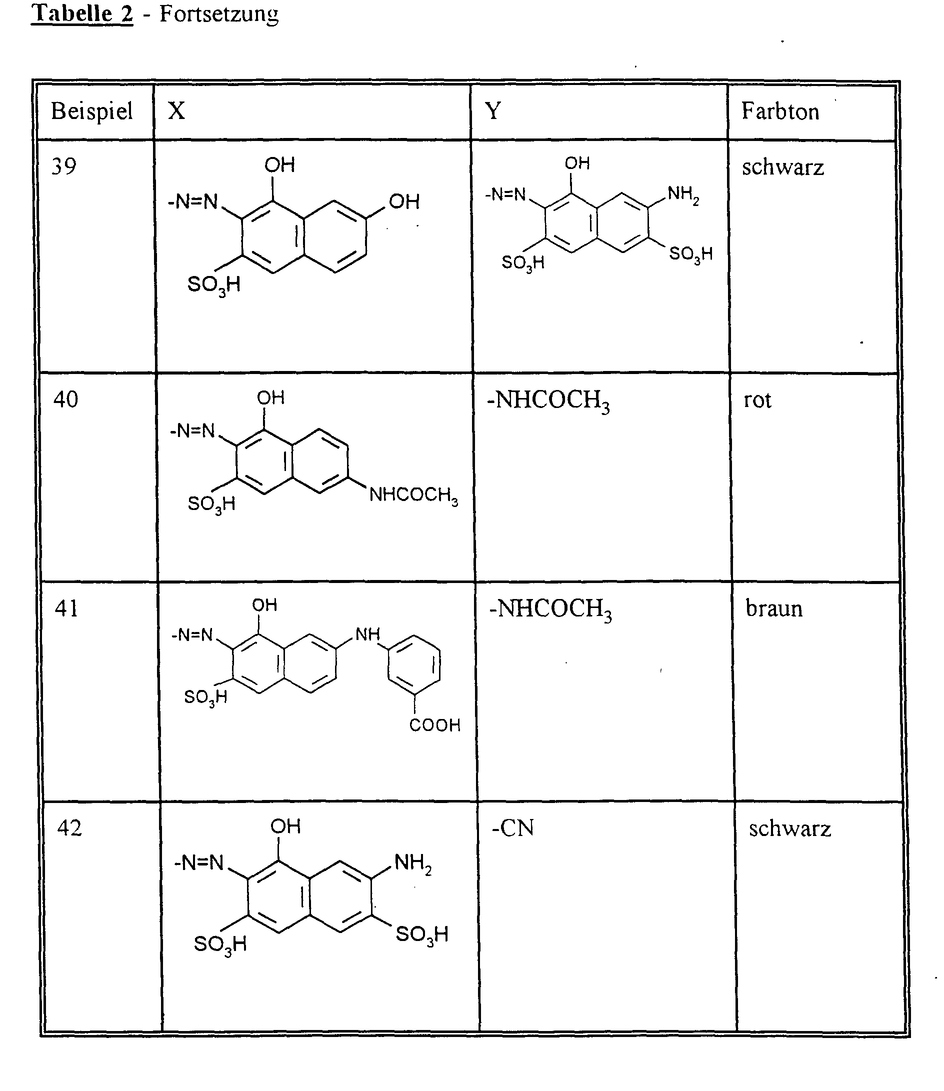

### Beispiel 43

5 g einer Mischung aus 70 Gew.-% Birkenholzsulfat-Zellstoff und 30 Gew.-% Kiefernholzsulfat-Zellstoff wurden in einem Laborholländer auf 30 bis 40° SR gemahlen. Diese Mischung wurde auf 1l mit Wasser aufgefüllt. Hierzu wurde eine Lösung von 25 mg des Farbstoffs des Beispiels 1 in 2,5 ml Wasser, 10 ml einer 1 gew.-%igen wäßrigen Lösung von Harzleim Dynacoll VS 50 der Fa. Akzo Chemie, Düren, und 15 ml einer 1 gew.-%igen wäßrigen Lösung von Aluminiumsulfat gegeben, wobei zwischen den Zugaben 8 Minuten gerührt wurde. Die gefärbte und geleimte Papiermasse wurde auf einen Laborblattbildner gegeben, gleichmäßig verteilt und abgesaugt. Anschließend wurde das schwarz gefärbte Papierblatt zwischen Filterpapier gepreßt und getrocknet. Im Abwasser der Färbung befand sich 1 % der eingesetzten Farbstoffmenge.

Ganz analog konnten die Farbstoffe der Beispiele 2 bis 42 eingesetzt werden.

## Patentansprüche

1. Verfahren zum Färben und/oder Bedrucken von cellulose- und/oder amidgruppenhaltigen Materialien, **dadurch gekennzeichnet, daß** als Farbstoff mindestens ein Stilbenazofarbstoff, der in Form der freien Säure der Formel (I) 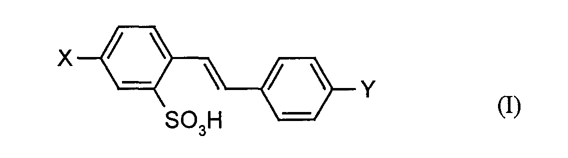 entspricht, worin
X und Y unabhängig voneinander für -CF₃, Halogen, -CONR¹R², -COOH, -COOR³, -CN, -NO₂, NR¹R², -OH, -OR³, -NHCOR³, -NHCOOR³, -NHCONHR³ oder -N=N-R stehen, wobei mindestens einer der Reste X oder Y für -N=N-R steht, und
R für einen Rest der Formel 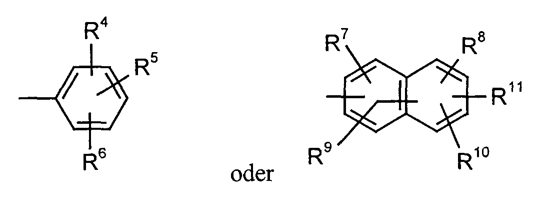 steht,
worin
R⁴, R⁵, R⁶, R⁷, R⁸, R⁹, R¹⁰ und R¹¹ unabhängig voneinander für H, Halogen, -OH, -OR³, -NR¹R², R³, -SO₃H, -SO₂NR¹R², -O-COR³, -NHCOR³ stehen und
R¹ und R² unabhängig voneinander für Wasserstoff, Formyl, für jeweils gegebenenfalls durch C₁-C₄-Alkyl, Hydroxy, C₁-bis C₄-Alkoxy, Amino, C₁- bis C₄-Mono- oder -Dialkylamino, Morpholino, Piperidino, N-R¹²-Piperazino, Halogen, Cyano, Nitro, Phenyl, Carboxy, C₁- bis C₄-Alkoxycarbonyl, Aminocarbonyl, C₁- bis C₄-Mono- oder -Dialkylaminocarbonyl, Sulfo oder OSO₃H substituiertes C₁- bis C₆-Alkyl, C₁- bis C₆-Alkylcarbonyl, C₁- bis C₆-Alkylsulfonyl, C₁- bis C₆-Alkoxycarbonyl, C₁- bis C₆-Mono- oder -Dialkylaminocarbonyl, C₅- bis C₇-Cycloalkyl, C₆- bis C₁₀-Aryl, C₆- bis C₁₀-Arylcarbonyl oder C₆- bis C₁₀-Arylsulfonyl stehen,
oder
R¹ und R² gemeinsam mit dem N-Atom, an welches sie gebunden sind, für einen 5- bis 7-gliedrigen gesättigten heterocyclischen Ring stehen, der zusätzlich weitere Heteroatome aus der Reihe O, S, SO₂ oder NR¹² enthalten kann, wobei
R¹² die Bedeutung von R¹ oder R² hat und
R³ für jeweils gegebenenfalls durch C₁-C₄-Alkyl, Hydroxy, C₁-C₄-Alkoxy, Halogen, Cyano oder Nitro, substituiertes C₁- bis C₆-Alkyl, C₆- bis C₁₀-Aryl oder C₆- bis C₁₀-Aryl-C₁-C₆-alkyl steht,
eingesetzt wird.

2. Verfahren gemäß Anspruch 1, **dadurch gekennzeichnet, daß** mindestens ein Stilbenazofarbstoff der Formel (I),
worin
X und Y unabhängig voneinander für -CN, -NO₂, -NH₂, -NHCOR³, -NHCOOR³, -NHCONHR³ oder -N=N-R stehen, wobei mindestens einer der Reste X oder Y für -N=N-R steht,
R für einen Rest 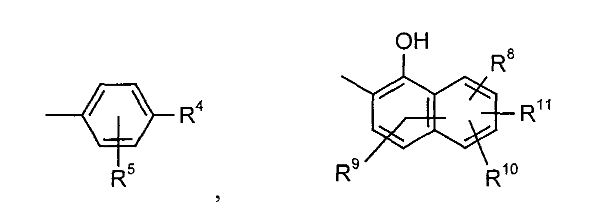 oder 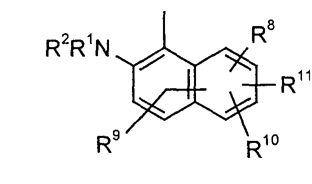 steht,
wobei
R¹, R², R⁴, R⁵, R⁸, R⁹, R¹⁰ und R¹¹ die in Anspruch 1 angegebene Bedeutung haben,
eingesetzt wird.

3. Verfahren gemäß Anspruch 1, **dadurch gekennzeichnet, daß** mindestens ein Stilbenazofarbstoff der Formel (I), worin
X und Y unabhängig voneinander für -N=N-R stehen,
wobei
R für einen Rest der Formel 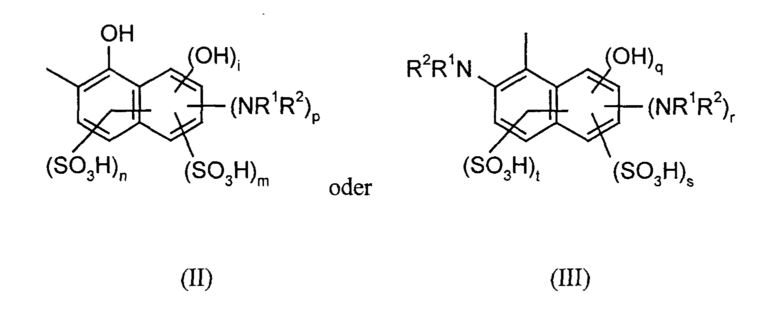 worin
i, m, n, p, q, r, s und t unabhängig voneinander für 0 oder 1 stehen,
wobei die Summen von m + n = 1 und s + t = 1 sind
und
R¹ und R² die in Anspruch 1 angegebene Bedeutung haben,
steht,
eingesetzt wird.

4. Verfahren gemäß Anspruch 1, **dadurch gekennzeichnet, daß** mindestens ein Stilbenazofarbstoff der Formel (I), worin
X und Y unabhängig voneinander für -N=N-R stehen,
wobei
R für einen Rest der Formel (II) oder (III) steht,
worin
R¹ und R² unabhängig voneinander für Wasserstoff, für gegebenenfalls durch Hydroxy, Methoxy, Ethoxy, Amino, Methylamino, Ethylamino, Dimethylamino, Diethylamino, Morpholino, Piperazino, N-Ethylpiperazino, N-Hydroxyethylpiperazino, N-Aminoethylpiperazino, Fluor, Chlor, Carboxy oder OSO₃H substituiertes C₁- bis C₆-Alkyl, für jeweils gegebenenfalls durch Hydroxy, Methoxy, Ethoxy, Fluor, Chlor oder Phenyl substituiertes C₁- bis C₆-Alkylcarbonyl, C₁- bis C₆-Alkylsulfonyl, C₁- bis C₆-Alkoxycarbonyl- oder C₁- bis C₆-Mono-oder -Dialkylaminocarbonyl, für Cyclopentyl oder Cyclohexyl, oder für jeweils gegebenenfalls durch Methyl, Ethyl, Hydroxy, Methoxy, Ethoxy, Fluor, Chlor, Amino, Cyano, Nitro, Carboxy, Aminocarbonyl oder Sulfo substituiertes Phenyl, Naphthyl, Benzoyl, Naphthylcarbonyl, Benzolsulfonyl oder Naphthalinsulfonyl stehen
oder
R¹ und R² gemeinsam mit dem N-Atom, an welches sie gebunden sind, für Morpholino, Piperazino, N-Ethylpiperazino, N-Hydroxyethylpiperazino, N-Aminoethylpiperazino oder 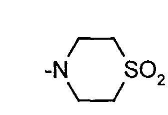 stehen,
n, p, q und s für 1 stehen und
m, i, r und t unabhängig voneinander für 0 oder 1 stehen,
eingesetzt wird.

5. Verfahren gemäß Anspruch 1, **dadurch gekennzeichnet, daß** mindestens ein Stilbenazofarbstoff der Formel (I), worin
X für einen Rest der Formel (IV) steht, welcher in Form seiner freien Säure der Formel 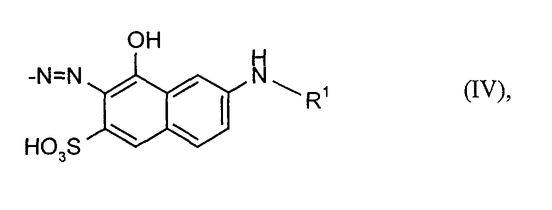 entspricht,
worin
R¹ für Wasserstoff, Phenyl, Methoxyphenyl, Hydroxyethoxyphenyl, Carboxyphenyl, Dicarboxyphenyl oder Sulfophenyl steht,
und
Y für einen Rest der Formel (IVa), (V), (VI) oder (VII) steht, welcher in Form der freien Säure der Formel 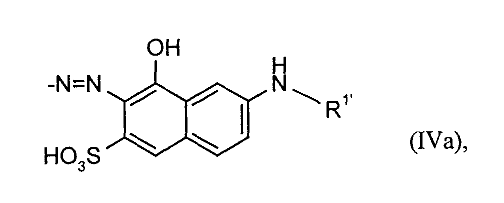 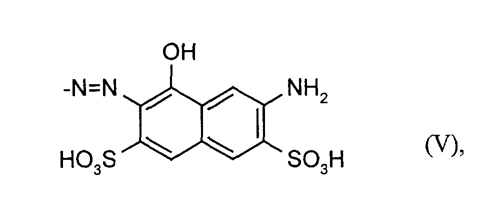 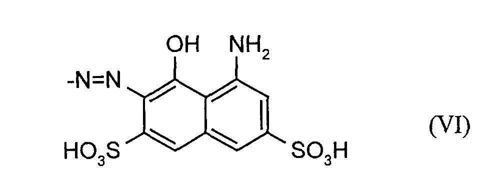 oder 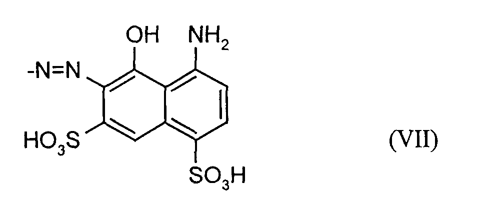
entspricht,
wobei R^{1'} die gleiche Bedeutung wie R¹ hat, vorzugsweise R¹ und R^{1'} aber nicht gleich sind, falls X für einen Rest (IV) und Y für einen Rest (IVa) steht, eingesetzt wird.

6. Verfahren gemäß Anspruch 1, **dadurch gekennzeichnet, daß** es sich bei den zu färbenden Materialien um Papier, Baumwolle, Viskose oder Leder handelt.

7. Stilbenazofarbstoffe, die in Form ihrer freien Säure der Formel (I) entsprechen, worin
X für einen Rest der Formel (VIII) oder (IX), wiedergegeben in Form ihrer freien Säure 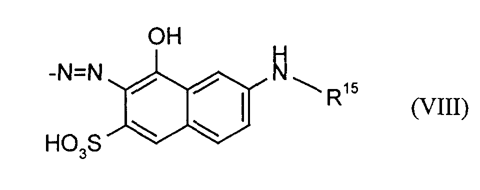 oder 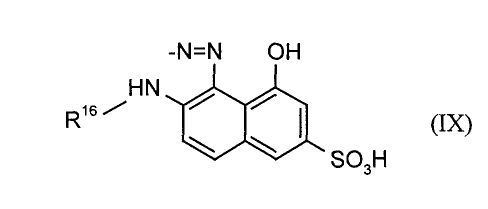 steht,
und
Y für einen Rest der Formeln (VIIIa), (X), (XI) oder (XII), wiedergegeben in Form ihrer freien Säure 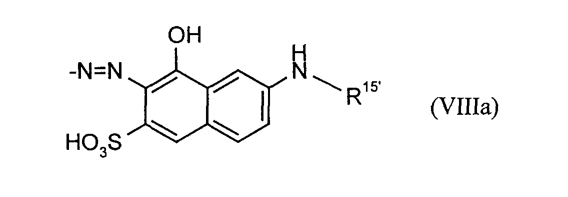 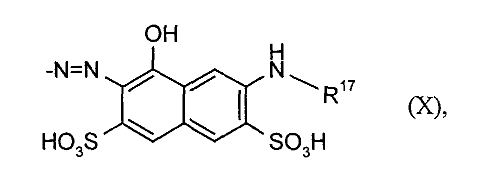 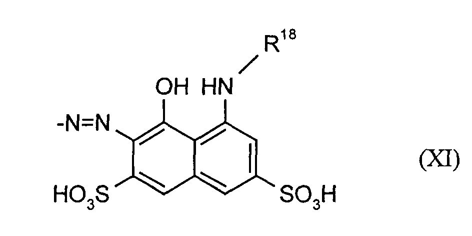 oder 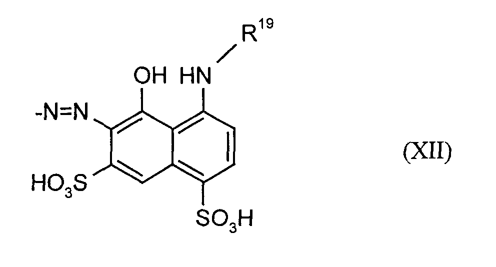 steht,
worin
R¹⁵, R^{15'} und R¹⁷ unabhängig voneinander für Wasserstoff, C₁- bis C₆-Alkyl, ω-Dimethyl- oder Diethylamino-C₃- bis C₅-alkyl, ω-Carboxy-C₂- bis C₁₅-alkyl, Formyl, C₁- bis C₆-Alkylcarbonyl oder für jeweils gegebenenfalls durch Methyl, Ethyl, Hydroxy, Methoxy, Ethoxy, Chlor, Brom, Cyano, Nitro, Carboxy oder Sulfo substituiertes Phenyl oder Benzoyl stehen,
R¹⁶ für Wasserstoff, C₁-C₆-Alkyl oder gegebenenfalls durch Methyl, Ethyl, Hydroxy, Methoxy, Ethoxy, Chlor, Brom, Cyano, Nitro, Carboxy oder Sulfo substituiertes Phenyl steht und
R¹⁸ und R¹⁹ unabhängig voneinander für Wasserstoff, Formyl, C₁- bis C₆-Alkylcarbonyl oder gegebenenfalls durch Methyl, Ethyl, Hydroxy, Methoxy, Ethoxy, Chlor, Brom, Cyano, Nitro, Carboxy oder Sulfo substituiertes Benzoyl stehen,
wobei im Falle, daß X für einen Rest der Formel (VIII) und Y für einen Rest der Formel (VIIIa) steht und R^{15'} und R¹⁵ gleich, sind diese nicht gleichzeitig für Acetyl, Phenyl, Benzoyl oder 4-Chlorphenyl stehen.

8. Wäßrige Farbstoffpräparation enthaltend 1 bis 15 Gew.-% mindestens eines Stilbenazofarbstoffs der Formel (I) gemäß Anspruch 1 und 80 bis 99,5 Gew.-% Wasser und/oder organisches Lösungsmittel.

9. Verwendung einer wäßrigen Farbstoffpräparation enthaltend mindestens einen Stilbenazofarbstoff der Formel (I) als Aufzeichnungsflüssigkeit für Tintenstrahlaufzeichnungsgeräte, **dadurch gekennzeichnet, daß** der Stilbenazofarbstoff in Form der freien Säure der Formel (I) 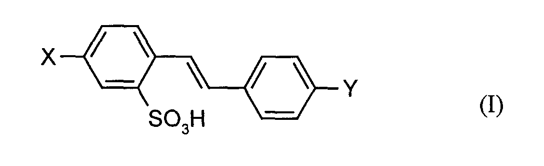 entspricht, worin
X und Y unabhängig voneinander für -CF₃, Halogen, -CONR¹R², -COOH, -COOR³, -CN, -NO₂, NR¹R², -OH, -OR³, -NHCOR³, -NHCOOR³, -NHCONHR³ oder -N=N-R stehen, wobei mindestens einer der Reste X oder Y für -N=N-R steht, und
R für einen Rest der Formel 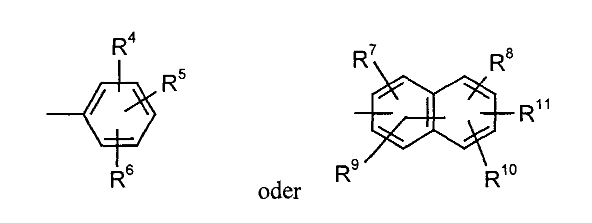 steht,
worin
R⁴, R⁵, R⁶, R⁷, R⁸, R⁹, R¹⁰ und R¹¹ unabhängig voneinander für H, Halogen, -OH, -OR³, -NR¹R², R³, -SO₃H, -SO₂NR¹R², -O-COR³, -NHCOR³ stehen und
R¹ und R² unabhängig voneinander für Wasserstoff, Formyl, für jeweils gegebenenfalls durch C₁-C₄-Alkyl, Hydroxy, C₁-bis C₄-Alkoxy, Amino, C₁- bis C₄-Mono- oder -Dialkylamino, Morpholino, Piperidino, N-R¹²-Piperazino, Halogen, Cyano, Nitro, Phenyl, Carboxy, C₁- bis C₄-Alkoxycarbonyl, Aminocarbonyl, C₁- bis C₄-Mono- oder -Dialkylaminocarbonyl, Sulfo oder OSO₃H substituiertes C₁- bis C₆-Alkyl, C₁- bis C₆-Alkylcarbonyl, C₁- bis C₆-Alkylsulfonyl, C₁- bis C₆-Alkoxycarbonyl, C₁- bis C₆-Mono- oder -Dialkylaminocarbonyl, C₅- bis C₇-Cycloalkyl, C₆- bis C₁₀-Aryl, C₆- bis C₁₀-Arylcarbonyl oder C₆- bis C₁₀-Arylsulfonyl stehen,
oder
R¹ und R² gemeinsam mit dem N-Atom, an welches sie gebunden sind, für einen 5- bis 7-gliedrigen gesättigten heterocyclischen Ring stehen, der zusätzlich weitere Heteroatome aus der Reihe O, S, SO₂ oder NR¹² enthalten kann, wobei
R¹² die Bedeutung von R¹ oder R² hat und
R³ für jeweils gegebenenfalls durch C₁-C₄-Alkyl, Hydroxy, C₁-C₄-Alkoxy, Halogen, Cyano oder Nitro, substituiertes C₁- bis C₆-Alkyl, C₆- bis C₁₀-Aryl oder C₆- bis C₁₀-Aryl-C₁-C₆-alkyl steht.

## Claims

1. Process for dyeing and/or printing materials containing cellulose and/or amide groups, **characterized in that** it comprises employing as the dyestuff at least one stilbene-azo dyestuff which, in the form of the free acid, corresponds to the formula (I) 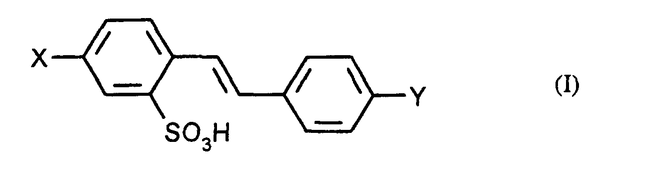 in which
X and Y independently of one another represent -CF₃, halogen, -CONR¹R², -COOH, -COOR³, -CN, -NO₂, NR¹R², -OH, -OR³, -NHCOR³, -NHCOOR³, -NHCONHR³ or -N=N-R, at least one of the radicals X or Y representing -N=N-R, and
R represents a radical of the formula 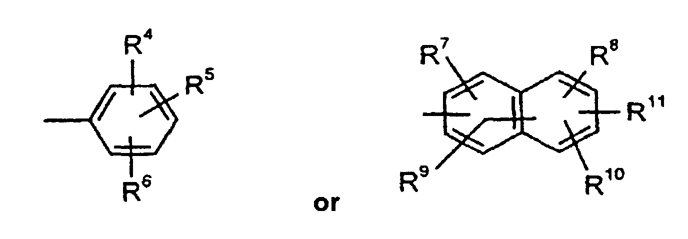
in which
R⁴, R⁵, R⁶, R⁷, R⁸, R⁹, R¹⁰ and R¹¹ independently of one another represent H, halogen, -OH, -OR³, -NR¹R², R³, -SO₃H, -SO₂NR¹R², -O-COR³ or -NHCOR³ and
R¹ and R² independently of one another represent hydrogen, or represent formyl, or represent in each case optionally C₁-C₄-alkyl-, hydroxyl-, C₁- to C₄-alkoxy-, amino-, C₁- to C₄-mono- or -dialkylamino-, morpholino-, piperidino-, N-R¹²-piperazino-, halogen-, cyano-, nitro-, phenyl-, carboxyl-, C₁- to C₄-alkoxycarbonyl-, aminocarbonyl-, C₁-to C₄-mono- or -dialkylaminocarbonyl-, sulpho- or OSO₃H-substituted C₁- to C₆-alkyl, C₁- to C₆-alkylcarbonyl, C₁- to C₆-alkylsulphonyl, C₁- to C₆-alkoxycarbonyl, C₁- to C₆-mono- or -dialkylaminocarbonyl, C₅- to C₇-cycloalkyl, C₆- to C₁₀-aryl, C₆- to C₁₀-arylcarbonyl or C₆- to C₁₀-arylsulphonyl,
or
R¹ and R², together with the N atom to which they are bonded, represent a 5- to 7-membered saturated heterocyclic ring, which can additionally contain further heteroatoms from the series consisting of O, S, SO₂ and NR¹², wherein
R¹² has the meaning of R¹ or R², and
R³ represents in each case optionally C₁-C₄-alkyl-, hydroxyl-, C₁-C₄-alkoxy-, halogen-, cyano- or nitro-substituted C₁- to C₆-alkyl, C₆- to C₁₀-aryl or C₆- to C₁₀-aryl-C₁-C₆-alkyl.

2. Process according to Claim 1, **characterized in that** at least one stilbene-azo dyestuff of the formula (I)
in which
X and Y independently of one another represent -CN, -NO₂, -NH₂, -NHCOR³, -NHCOOR³, -NHCONHR³ or -N=N-R, at least one of the radicals X or Y representing -N=N-R, and
R represents a radical 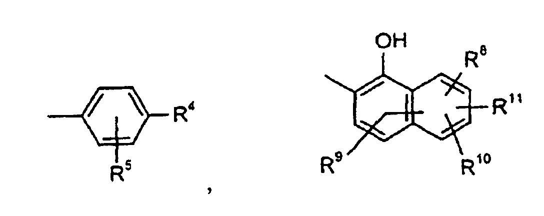 or 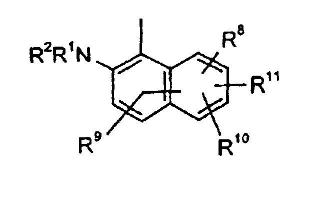 in which
R¹, R², R⁴, R⁵, R⁸, R⁹, R¹⁰ and R¹¹ have the meaning given in Claim 1,
is employed.

3. Process according to Claim 1, **characterized in that** at least one stilbene-azo dyestuff of the formula (I) in which
X and Y independently of one another represent -N=N-R,
in which
R represents a radical of the formula 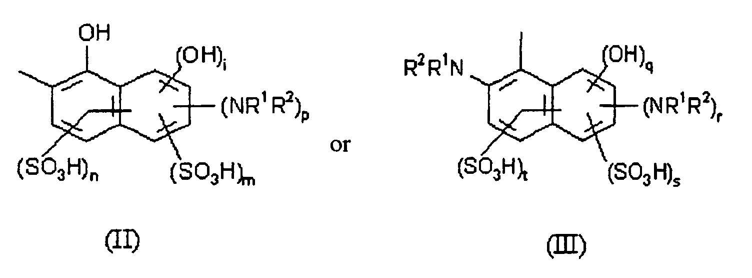 in which
i, m, n, p, q, r, s and t independently of one another represent 0 or 1, where the sums are m + n = 1 and s + t = 1,
and
R¹ and R² have the meaning given in Claim 1,
is employed.

4. Process according to Claim 1, **characterized in that** at least one stilbene-azo dyestuff of the formula (I) in which
X and Y independently of one another represent -N=N-R,
in which
R represents a radical of the formula (II) or (III),
in which
R¹ and R² independently of one another represent hydrogen, or represent optionally hydroxyl-, methoxy-, ethoxy-, amino-, methylamino-, ethylamino-, dimethylamino-, diethylamino-, morpholino-, piperazino-, N-ethylpiperazino-, N-hydroxyethylpiperazino-, N-aminoethylpiperazino-, fluorine-, chlorine-, carboxyl- or OSO₃H-substituted C₁- to C₆-alkyl, or represent in each case optionally hydroxyl-, methoxy-, ethoxy-, fluorine-, chlorine- or phenyl-substituted C₁- to C₆-alkylcarbonyl, C₁ to C₆-alkylsulphonyl, C₁- to C₆-alkoxycarbonyl or C₁- to C₆-mono- or -dialkylaminocarbonyl, or represent cyclopentyl or cyclohexyl, or represent in each case optionally methyl-, ethyl-, hydroxyl-, methoxy-, ethoxy-, fluorine-, chlorine-, amino-, cyano-, nitro-, carboxyl-, aminocarbonyl- or sulpho-substituted phenyl, naphthyl, benzoyl, naphthylcarbonyl, benzenesulphonyl or naphthalenesulphonyl,
or
R¹ and R², together with the N atom to which they are bonded, represent morpholino, piperazino, N-ethylpiperazino, N-hydroxyethylpiperazino, N-aminoethylpiperazino or 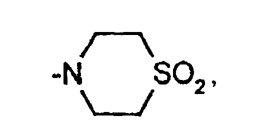 n, p, q and s represent 1 and
m, i, r and t independently of one another represent 0 or 1,
is employed.

5. Process according to Claim 1, **characterized in that** at least one stilbene-azo dyestuff of the formula (I) in which
X represents a radical of the formula (IV) which, in the form of its free acid, corresponds to the formula 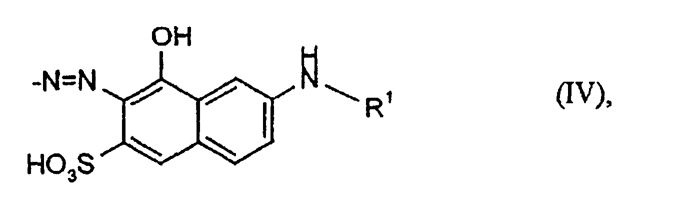 in which
R¹ represents hydrogen, phenyl, methoxyphenyl, hydroxyethoxyphenyl, carboxyphenyl, dicarboxyphenyl or sulphophenyl,
and
Y represents a radical of the formula (IVa), (V), (VI) or (VII) which, in the form of the free acid, corresponds to the formula 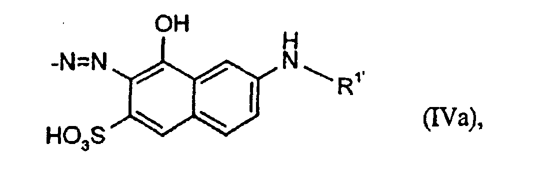 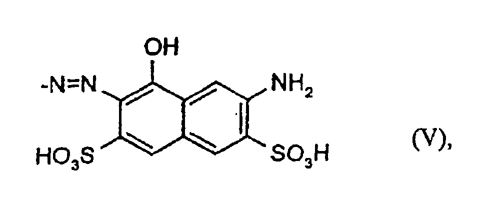 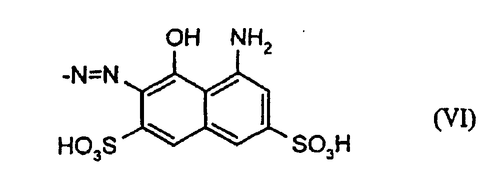 or 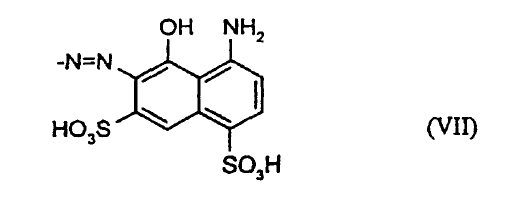 in which R^{1'} has the same meaning as R¹, but R¹ and R^{1'} are preferably not identical if X represents a radical (IV) and Y represents a radical (IVa), is employed.

6. Process according to Claim 1, **characterized in that** the materials to be dyed are paper, cotton, viscose or leather.

7. Stilbene-azo dyestuffs which, in the form of their free acid, correspond to the formula (I) in which
X represents a radical of the formula (VIII) or (IX), shown in the form of its free acid 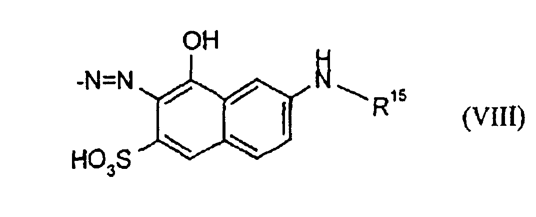 or 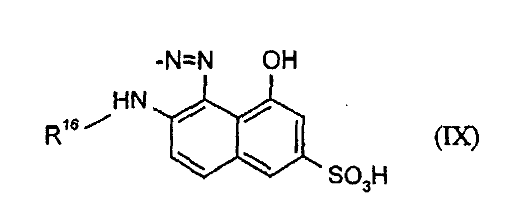 and
Y represents a radical of the formula (VIIIa), (X), (XI) or (XII), shown in the form of its free acid 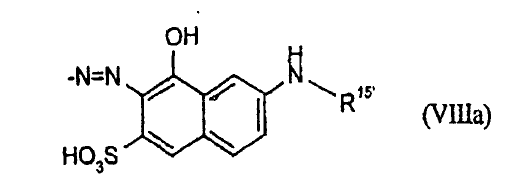 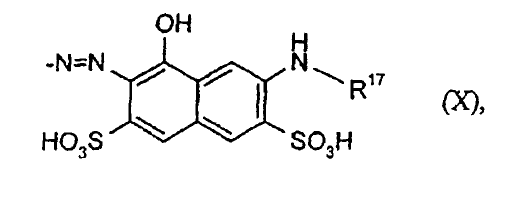 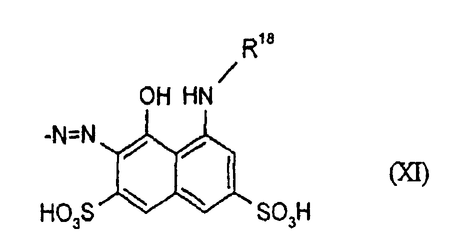 or 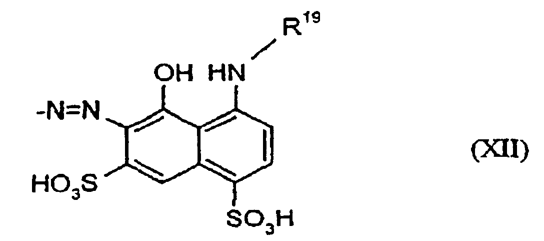 in which
R¹⁵, R^{15'} and R¹⁷ ⁷ independently of one another represent hydrogen, C₁- to C₆-alkyl, ω-dimethyl- or diethylamino-C₃- to -C₅-alkyl, ω-carboxy-C₂- to -C₁₅-alkyl, formyl or C₁- to C₆-alkylcarbonyl, or represent in each case optionally methyl-, ethyl-, hydroxy-, methoxy-, ethoxy-, chlorine-, bromine-, cyano-, nitro-, carboxyl- or sulpho-substituted phenyl or benzoyl,
R¹⁶ represents hydrogen, C₁-C₆-alkyl or optionally methyl-, ethyl-, hydroxy-, methoxy-, ethoxy-, chlorine-, bromine-, cyano-, nitro-, carboxy- or sulpho-substituted phenyl and
R¹⁸ and R¹⁹ independently of one another represent hydrogen, formyl, C₁- to C₆-alkylcarbonyl or optionally methyl-, ethyl-, hydroxy-, methoxy-, ethoxy-, chlorine-, bromine-, cyano-, nitro-, carboxy- or sulpho-substituted benzoyl,
wherein, in the case where X represents a radical of the formula (VIII) and Y represents a radical of the formula (VIIIa) and R^{15'} and R¹⁵ are identical, these do not simultaneously represent acetyl, phenyl, benzoyl or 4-chlorophenyl.

8. Aqueous dyestuff preparation comprising 1 to 15% by weight of at least one stilbene-azo dyestuff of the formula (I) according to Claim 1 and 80 to 99.5% by weight of water and/or organic solvent.

9. Use of an aqueous dyestuff preparation comprising at least one stilbene-azo dyestuff of the formula(I) as a recording liquid for ink-jet recording apparatuses, **characterized in that** the stilbene-azo dyestuff, in the form of the free acid, corresponds to the formula (I) 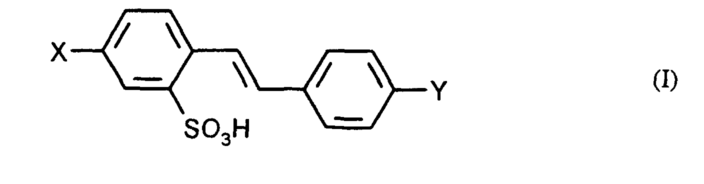 in which
X and Y independently of one another represent -CF₃, halogen, -CONR¹R², -COOH, -COOR³, -CN, -NO₂, NR¹R², -OH, -OR³, -NHCOR³, -NHCOOR³, -NHCONHR³ or -N=N-R, at least one of the radicals X or Y representing -N=N-R, and
R represents a radical of the formula 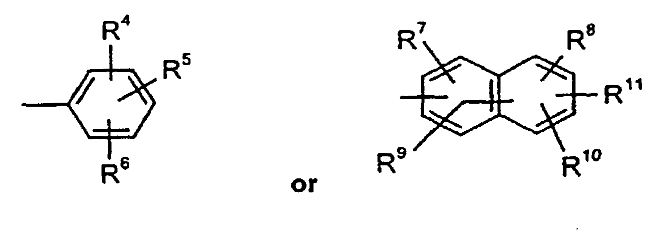 in which
R⁴, R⁵, R⁶, R⁷, R⁸, R⁹, R¹⁰ and R¹¹ independently of one another represent H, halogen, -OH, -OR³, -NR¹R², R³, -SO₃H, -SO₂NR¹R², -O-COR³ or -NHCOR³ and
R¹ and R² independently of one another represent hydrogen, or represent formyl, or represent in each case optionally C₁-C₄-alkyl-, hydroxyl-, C₁- to C₄-alkoxy-, amino-, C₁- to C₄-mono- or -dialkylamino-, morpholino-, piperidino-, N-R¹²-piperazino-, halogen-, cyano-, nitro-, phenyl-, carboxyl-, C₁- to C₄-alkoxycarbonyl-, aminocarbonyl-, C₁-to C₄-mono- or -dialkylaminocarbonyl-, sulpho- or OSO₃H-substituted C₁- to C₆-alkyl, C₁- to C₆-alkylcarbonyl, C₁- to C₆-alkylsulphonyl, C₁- to C₆-alkoxycarbonyl, C₁- to C₆-mono- or -dialkylaminocarbonyl, C₅- to C₇-cycloalkyl, C₆- to C₁₀-aryl, C₆- to C₁₀-arylcarbonyl or C₆- to C₁₀-arylsulphonyl,
or
R¹ and R², together with the N atom to which they are bonded, represent a 5- to 7-membered saturated heterocyclic ring, which can additionally contain further heteroatoms from the series consisting of O, S, SO₂ and NR¹², wherein
R¹² has the meaning of R¹ or R², and
R³ represents in each case optionally C₁-C₄-alkyl-, hydroxyl-, C₁-C₄-alkoxy-, halogen-, cyano- or nitro-substituted C₁- to C₆-alkyl, C₆- to C₁₀-aryl or C₆- to C₁₀-aryl-C₁-C₆-alkyl.

## Revendications

1. Procédé pour colorer et/ou imprimer des matériaux contenant de la cellulose et/ou des groupes amides, **caractérisé en ce que** l'on utilise comme colorant au moins un colorant azoïque de type stilbène qui, sous forme de l'acide libre, correspond à la formule (I) 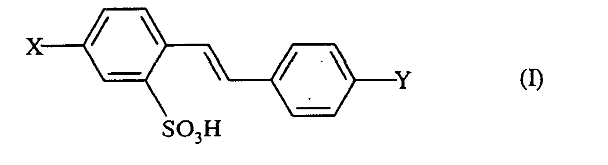 où
X et Y représentent indépendamment l'un de l'autre -CF₃, halogène, -CONR¹R², -COOH, -COOR³, -CN, -NO₂, NR¹R², -OH, -OR³, -NHCOR³, -NHCOOR³, -NHCONHR³ ou -N=N-R, où au moins l'un des restes X et Y représente -N=N-R, et
R représente un reste de formule 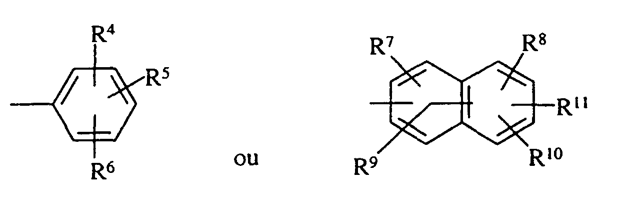
où
R⁴, R⁵, R⁶, R⁷, R⁸, R⁹, R¹⁰ et R¹¹ représentent indépendamment les uns des autres H, halogène, -OH, -OR³, -NR¹R², R³, -SO₃H, -SO₂NR¹R², -O-COR³, -NHCOR³ et
R¹ et R² représentent indépendamment l'un de l'autre l'hydrogène, formyle, alkyle en C₁-C₆, alkyle en C₁-C₆-carbonyle, alkyle en C₁-C₆-sulfonyle, alcoxy en C₁-C₆-carbonyle, mono ou dialkyle en C₁-C₆-aminocarbonyle, cycloalkyle en C₅-C₇, aryle en C₆-C₁₀, aryle en C₆-C₁₀-carbonyle ou aryle en C₆-C₁₀-sulfonyle, chacun éventuellement substitué par alkyle en C₁-C₄, hydroxyle, alcoxy en C₁-C₄, amino, mono ou dialkyle en C₁-C₄-amino, morpholino, pipéridino, N-R¹²-pipérazino, halogène, cyano, nitro, phényle, carboxyle, alcoxy en C₁-C₄-carbonyle, aminocarbonyle, mono ou dialkyle en C₁-C₄-aminosulfonyle, sulfo ou OSO₃H,
ou bien
R¹ et R² représentent avec l'atome N auquel ils sont liés un cycle hétérocyclique saturé à 5 à 7 chaînons qui peut contenir en outre d'autres hétéroatomes de la série de O, S, SO₂ et NR¹², où
R¹² a la signification de R¹ ou R² et
R³ représente alkyle en C₁-C₆, aryle en C₆-C₁₀ ou aryle en C₆-C₁₀-alkyle en C₁-C₆, chacun éventuellement substitué par alkyle en C₁-C₄, hydroxyle, alcoxy en C₁-C₄, halogène, cyano ou nitro.

2. Procédé selon la revendication 1, **caractérisé en ce que** l'on utilise au moins un colorant azoïque de type stilbène de formule (I)
où
X et Y représentent indépendamment l'un de l'autre -CN, -NO₂, -NH₂, -NHCOR³, -NHCOOR³, -NHCONHR³ ou -N=N-R, où au moins l'un des restes X et Y représente -N=N-R,
R représente un reste 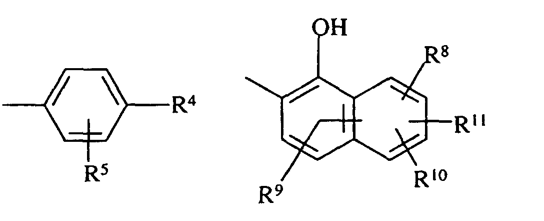 ou 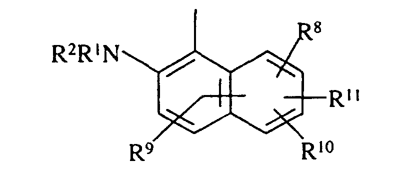 où
R¹, R², R⁴, R⁵, R⁸, R⁹, R¹⁰ et R¹¹ ont la signification indiquée dans la revendication 1.

3. Procédé selon la revendication 1, **caractérisé en ce que** l'on utilise au moins un colorant azoïque de type stilbène de formule (I) où
X et Y représentent indépendamment l'un de l'autre -N=N-R,
où
R représente un reste de formule 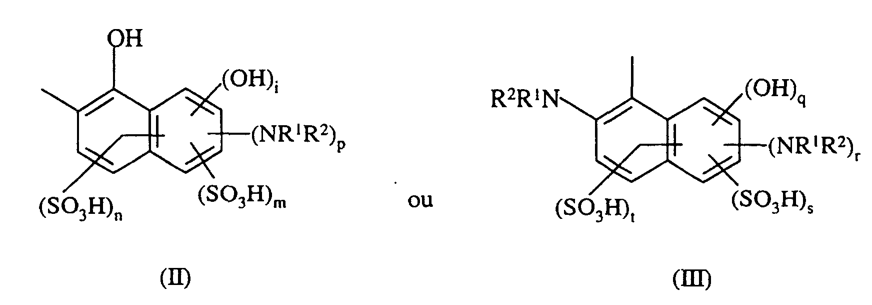 où
i, m, n, p, q, r, s et t représentent indépendamment les uns des autres 0 ou 1,
où les sommes m + n = 1 et s + t = 1 et
R¹ et R² ont la signification indiquée dans la revendication 1.

4. Procédé selon la revendication 1, **caractérisé en ce qu'**on utilise au moins un colorant azoïque de type stilbène de formule (I), où
X et Y représentent indépendamment l'un de l'autre -N=N-R,
où
R représente un reste de formule (II) ou (III)
où
R¹ et R² représentent indépendamment l'un de l'autre l'hydrogène, alkyle en C₁ à C₆ éventuellement substitué par hydroxyle, méthoxy, éthoxy, amino, méthylamino, éthylamino, diméthylamino, diéthylamino, morpholino, pipérazino, N-éthylpipérazino, N-hydroxyéthylpipérazino, N-aminoéthylpipérazino, fluor, chlore, carboxyle ou OSO₃H, alkyle en C₁-C₆-carbonyle, alkyle en C₁-C₆-sulfonyle, alcoxy en C₁-C₆-carbonyle ou mono ou dialkyle en C₁-C₆-aminocarbonyle, chacun éventuellement substitué par hydroxyle, méthoxy, éthoxy, fluor, chlore ou phényle, cyclopentyle ou cyclohexyle, ou bien phényle, naphtyle, benzoyle, naphtylcarbonyle, benzènesulfonyle ou naphtalènesulfonyle, chacun éventuellement substitué par méthyle, éthyle, hydroxyle, méthoxy, éthoxy, fluor, chlore, amino, cyano, nitro, carboxyle, aminocarbonyle ou sulfo
ou bien
R¹ et R² représentent avec l'atome N auquel ils sont liés morpholino, pipérazino, N-éthylpipérazino, N-hydroxyéthylpipérazino, N-aminoéthylpipérazino ou 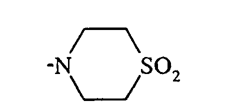
n, p, q et s représentent 1 et
m, i, r et t représentent indépendamment les uns des autres 0 ou 1.

5. Procédé selon la revendication 1, **caractérisé en ce que** l'on utilise au moins un colorant azoïque de type stilbène de formule (I), où
X représente un reste de formule (IV) qui, sous forme de son acide libre, correspond à la formule 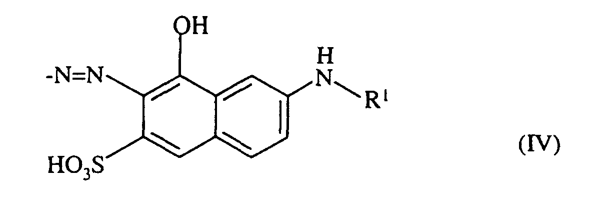 où
R¹ représente l'hydrogène, phényle, méthoxyphényle, hydroxyéthoxyphényle, carboxyphényle, dicarboxyphényle ou sulfophényle,
et
Y représente un reste de fomule (IVa), (V), (VI) ou (VII) qui, sous forme de l'acide libre, correspond à la formule 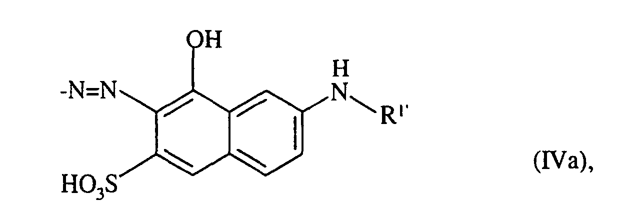 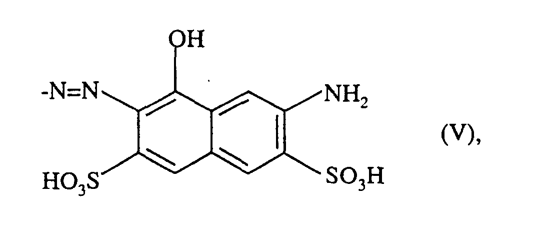 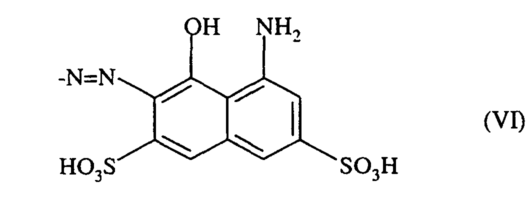 ou 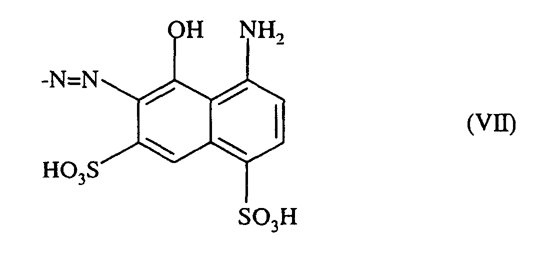 où
R^{1'} a la même signification que R¹, mais de préférence R¹ et R^{1'} ne sont pas identiques quand X représente un reste (IV) et Y représente un reste (IVa).

6. Procédé selon la revendication 1, **caractérisé en ce que** les matériaux à colorer sont du papier, du coton, de la viscose ou du cuir.

7. Colorants azoïques de type stilbène qui, sous forme de leur acide libre, correspondent à la formule (I) où
X représente un reste de formule (VIII) ou (IX), représenté sous forme de leur acide libre 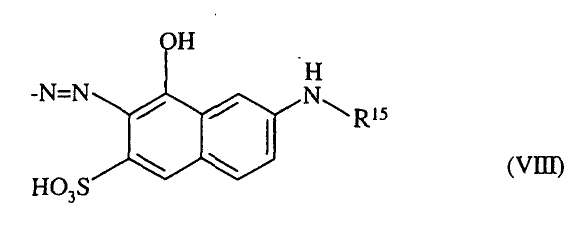 ou 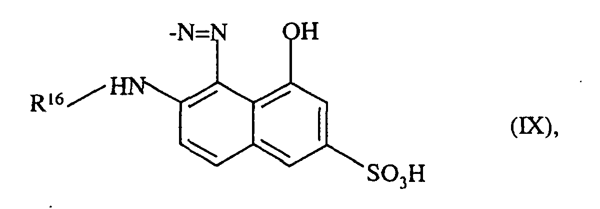 et
Y représente un reste des formules (VIIIa), (X), (XI) ou (XII), représenté sous forme de leur acide libre 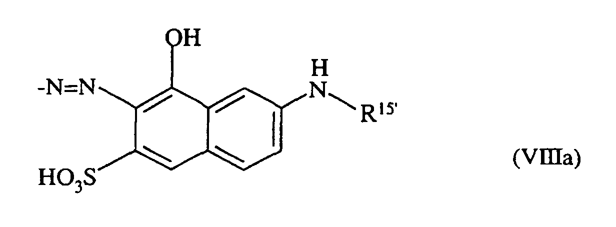 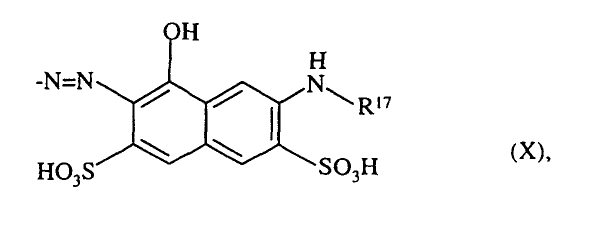 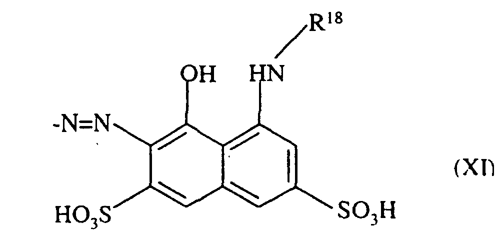 ou 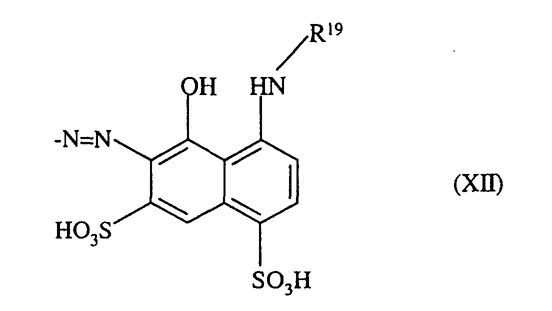
où
R¹⁵, R^{15'} et R¹⁷ représentent indépendamment les uns des autres l'hydrogène, alkyle en C₁-C₆, ω-diméthyl- ou diéthylamino-alkyle en C₃ à C₅, ω-carboxy-alkyle en C₂ à C₁₅, formyle, alkyle en C₁ à C₆-carbonyle ou phényle ou benzoyle, chacun éventuellement substitué par méthyle, éthyle, hydroxyle, méthoxy, éthoxy, chlore, brome, cyano, nitro, carboxyle ou sulfo,
R¹⁶ représente l'hydrogène, alkyle en C₁-C₆, ou phényle éventuellement substitué par méthyle, éthyle, hydroxyle, méthoxy, éthoxy, chlore, brome, cyano, nitro, carboxyle ou sulfo et
R¹⁸ et R¹⁹ représentent indépendamment l'un de l'autre l'hydrogène, formyle, alkyle en C₁-C₆-carbonyle ou benzoyle éventuellement substitué par méthyle, éthyle, hydroxyle, méthoxy, éthoxy, chlore, brome, cyano, nitro, carboxyle ou sulfo,
où, dans le cas où X représente un reste de formule (VIII) et Y représente un reste de formule (VIIIa) et R^{15'} et R¹⁵ sont identiques, ceux-ci ne représentent pas simultanément acétyle, phényle, benzoyle ou 4-chlorophényle.

8. Préparation aqueuse de colorants contenant 1 à 15 % en masse d'au moins un colorant azoïque de type stilbène de formule (I) selon la revendication 1 et 80 à 99,5 % en masse d'eau et/ou de solvant organique.

9. Utilisation d'une préparation aqueuse de colorants contenant au moins un colorant azoïque de type stilbène de formule (I) comme liquide d'enregistrement pour appareils d'enregistrement à jet d'encre, **caractérisée en ce que** le colorant azoïque de type stilbène correspond, sous forme de l'acide libre, à la formule (I) 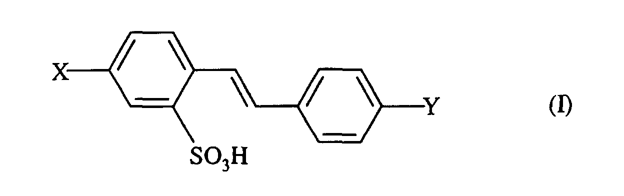 où
X et Y représentent indépendamment l'un de l'autre -CF₃, halogène, -CONR¹R², -COOH, -COOR³, -CN, -NO₂, NR¹R², -OH, -OR³, -NHCOR³, -NHCOOR³, -NHCONHR³ ou -N=N-R, où au moins l'un des restes X et Y représente -N=N-R, et
R représente un reste de formule 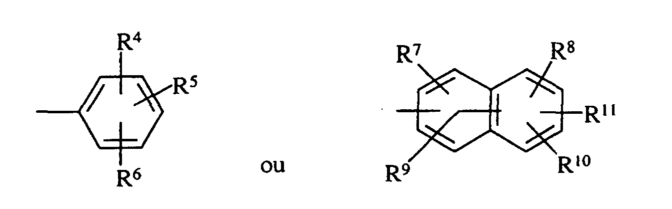
où
R⁴, R⁵, R⁶, R⁷, R⁸, R⁹, R¹⁰ et R¹¹ représentent indépendamment les uns des autres H, halogène, -OH, -OR³, -NR¹R², R³, -SO₃H, -SO₂NR¹R², -O-COR³, -NHCOR³ et
R¹ et R² représentent indépendamment l'un de l'autre l'hydrogène, formyle, alkyle en C₁-C₆, alkyle en C₁-C₆-carbonyle, alkyle en C₁-C₆-sulfonyle, alcoxy en C₁-C₆-carbonyle, mono ou dialkyle en C₁-C₆-aminocarbonyle, cycloalkyle en C₅-C₇, aryle en C₆-C₁₀, aryle en C₆-C₁₀-carbonyle ou aryle en C₆-C₁₀-sulfonyle, chacun éventuellement substitué par alkyle en C₁-C₄, hydroxyle, alcoxy en C₁-C₄, amino, mono ou dialkyle en C₁-C₄-amino, morpholino, pipéridino, N-R¹²-pipérazino, halogène, cyano, nitro, phényle, carboxyle, alcoxy en C₁-C₄-carbonyle, aminocarbonyle, mono ou dialkyle en C₁-C₄-aminosulfonyle, sulfo ou OSO₃H,
ou bien
R¹ et R² représentent avec l'atome N auquel ils sont liés un cycle hétérocyclique saturé à 5 à 7 chaînons qui peut contenir en outre d'autres hétéroatomes de la série de O, S, SO₂ et NR¹², où R¹² a la signification de R¹ ou R² et
R³ représente alkyle en C₁-C₆, aryle en C₆-C₁₀ ou aryle en C₆-C₁₀-alkyle en C₁-C₆, chacun éventuellement substitué par alkyle en C₁-C₄, hydroxyle, alcoxy en C₁-C₄, halogène, cyano ou nitro.
